# EUROPEAN PATENT SPECIFICATION

(11) **EP 2 603 812 B1**
(45) Date of publication and mention of the grant of the patent: **16.12.2015**
(21) Application number: 10793330.1
(22) Date of filing: 11.08.2010
(51) Int. Cl.: G01S 13/90, G01S 13/00

(54) **MULTI-GRAZING ISAR IMAGING METHOD AND SYSTEM PROVIDING ISAR SIDE-VIEW IMAGES WITH IMPROVED CROSS-RANGE RESOLUTION**
ISAR-BILDGEBUNGSVERFAHREN MIT MEHREREN GLANZWINKELN UND SYSTEM FÜR ISAR-SEITENANSICHTSBILDER MIT VERBESSERTER QUERSCHNITTAUFLÖSUNG
PROCÉDÉ D'IMAGERIE PAR ISAR À MULTIPLES INCIDENCES RASANTES ET SYSTÈME PRODUISANT DES IMAGES DE VUE LATÉRALE PAR ISAR AYANT UNE MEILLEURE RÉSOLUTION TRANSVERSALE

(43) Date of publication of application: 19.06.2013
(73) Proprietor: SELEX ES S.P.A, 00195 Roma (RM) (IT)
(72) Inventor: PASTINA, Debora, 00161 Roma (IT); BUCCIARELLI, Marta, 00127 Roma (IT); LOMBARDO, Pierfrancesco, 00198 Roma (IT); SPINA, Chiara, 00143 Roma (IT)
(74) Representative: Bergadano, Mirko
(86) International application number: PCT/IT2010/000370
(87) International publication number: WO 2012/020439

(56) References cited:
- US-B1- 7 119 732
- DEBORA PASTINA ET AL: "Multistatic and MIMO Distributed ISAR for Enhanced Cross-Range Resolution of Rotating Targets", IEEE TRANSACTIONS ON GEOSCIENCE AND REMOTE SENSING, IEEE SERVICE CENTER, PISCATAWAY, NJ, US, vol. 48, no. 8, 1 August 2010 (2010-08-01) , pages 3300-3317, XP011307070, ISSN: 0196-2892
- DEBORA PASTINA ET AL: "Multi-platform ISAR for flying formation", RADAR CONFERENCE, 2009 IEEE, IEEE, PISCATAWAY, NJ, USA, 4 May 2009 (2009-05-04), pages 1-6, XP031461520, ISBN: 978-1-4244-2870-0
- MARTORELLA M ET AL: "Advances in Bistatic Inverse Synthetic Aperture Radar", RADAR CONFERENCE - SURVEILLANCE FOR A SAFER WORLD, 2009. RADAR. INTERNATIONAL, IEEE, PISCATAWAY, NJ, USA, 12 October 2009 (2009-10-12), pages 1-6, XP031653101, ISBN: 978-2-912328-55-7
- XUERU BAI ET AL: "Scaling the 3-D Image of Spinning Space Debris via Bistatic Inverse Synthetic Aperture Radar", IEEE GEOSCIENCE AND REMOTE SENSING LETTERS, IEEE SERVICE CENTER, NEW YORK, NY, US, vol. 7, no. 3, 1 July 2010 (2010-07-01), pages 430-434, XP011300696, ISSN: 1545-598X
- GUILLAUME GINOLHAC ET AL: "Multifrequency and multistatic inverse synthetic aperture radar, with application to FM passive radar", EURASIP JOURNAL ON ADVANCES IN SIGNAL PROCESSING, HINDAWI PUBLISHING CORP, US, vol. 2010, 1 January 2010 (2010-01-01), pages 1-13, XP007918375, ISSN: 1687-6172, DOI: DOI:10.1155/2010/497074

## Description

### TECHNICAL FIELD OF THE INVENTION

The present invention relates, in general, to Inverse Synthetic Aperture Radar (ISAR) imaging and, in particular, to a multi-sensor-based ISAR imaging method and system providing ISAR images with improved cross-range resolution.

### BACKGROUND ART

As well known, medium/high resolution images of man-made targets can be obtained by using ISAR technique. For a detailed discussion of this technique reference may, for example, be made to J.L. Walker, Range-Doppler imaging of rotating objects, IEEE Trans on AES, Vol. 16, No.1, 1980, pp.23-52.

In particular, according to the ISAR technique, a wide-bandwidth waveform is transmitted from a radar to achieve fine range resolution, and a coherent processing of echoes returned from a target to the radar at different viewing angles gives fine cross-range resolution. The angular aperture under which the target is viewed by the radar is due to the motion of the target itself.

Specifically, the ISAR technique exploits the rotational motion of a target with respect to its fulcrum to provide high resolution images of the target itself.

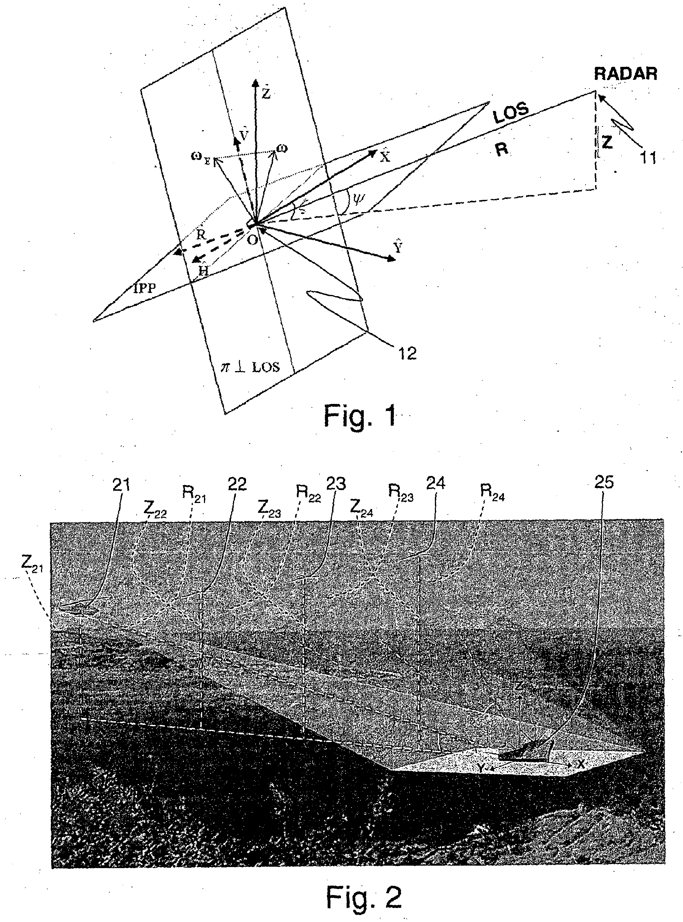

In order to understand ISAR imaging principles, in figure 1 a typical single-sensor-based ISAR imaging geometry is schematically shown.

In particular, as shown in figure 1, a radar 11 illuminates, with radar signals such that to allow to form an ISAR image, a target 12, having its fulcrum referenced as *O*.

In detail, the figure 1 shows also a first Cartesian reference system *XYZ* centred on the fulcrum *O* of the target 12 and defined by two perpendicular axes, namely a first, or longitude-related, axis *X* and a second, or latitude-related, axis *Y*, lying on a plane, namely a horizontal plane *XY*, tangent to the Earth's surface (not shown in Figure 1), and by a third, or height-related, axis *Z* perpendicular to the horizontal plane *XY.* The figure 1 shows also a second Cartesian reference system *RHV* centred on the fulcrum *O* of the target 12 and defined by a fourth axis *R* oriented along a direction identified by a line linking the fulcrum *O* of the target 12 and the phase centre of the antenna of the radar 11, i.e., the so-called Line Of Sight (LOS), by a fifth, or horizontal, axis *H* belonging to the horizontal plane *XY* and perpendicular to the fourth axis *R,* and by a sixth, or vertical, axis *V* perpendicular to both the fourth axis *R* and the horizontal axis *H.* In this context, the first Cartesian reference system *XYZ* is an absolute reference system, while the second Cartesian reference system *RHV* changes according to the considered observation geometry.

As shown in figure 1, the radar 11 observes the target 12 with:
- an aspect angle *ζ* which is defined as the angle between the longitude-related axis *X* and the projection onto the horizontal plane *XY* of the LOS; and
- a grazing angle *ψ* which is defined as $ψ = arcsin \left(\frac{Z}{R}\right) ,$ where *Z* denotes an elevation distance, along the height-related axis *Z* direction, between the fulcrum *O* of the target 12 and the phase centre of the antenna of the radar 11, and *R* denotes a slant range distance, along the fourth axis *R* direction, i.e., the LOS direction, between the fulcrum *O* of the target 12 and the phase centre of the antenna of the radar 11.

Moreover, as shown in figure 1, the target 12 is undergoing a rotational motion represented by an overall rotation vector *ω̅* originating from the fulcrum *O* of the target 12, whose effective component, the so-called effective rotation rate vector *ω̅_{E}*, is perpendicular to the LOS (i.e., the effective rotation rate vector *ω̅_{E}* is the projection of the overall rotation vector a onto a plane *π* shown in figure 1, perpendicular to the LOS, i.e., the fourth axis *R,* and containing the horizontal axis *H* and the vertical axis *V).* The kind of ISAR image achievable depends on the orientation of the effective rotation rate vector *ω̅_{E}*, since an ISAR image is obtained by the projection of the target 12 onto a plane called Image Projection Plane (IPP) which is perpendicular to the effective rotation rate vector *ω̅*_{E} and contains the LOS.

In detail, ISAR plane images, also called ISAR topview images, of the target 12 arise when it is undergoing yaw motions corresponding to a vertical orientation of the effective rotation rate vector *ω̅_{E}* (i.e., when the effective rotation rate vector *ω̅_{E}* is oriented along the vertical axis V direction). This is typical, for example, for ground targets.

ISAR profile images, also called ISAR side-view images, of the target 12 arise when it is undergoing rotational motions, such as pitch motions and/or roll motions, corresponding to a horizontal orientation of the effective rotation rate vector *ω̅_{E}* (i.e., when the effective rotation rate vector *ω̅_{E}* is oriented along the horizontal axis *H* direction). This is the typical case of ships, since the sea induces this kind of motions.

The signal reflected by a target undergoing a rotational motion is characterized by a phase which depends on the characteristics of the motion. In particular, the so-called phase history from pulse to pulse is a function of the effective rotation rate vector *ω̅_{E}*. If the phase history of scatterers of a target during a proper interval *T* is known, it is possible to compensate the phase variation from pulse to pulse and to integrate the signal contribution at each pulse with the minimum loss of power and to obtain a peak of energy in a position corresponding to the actual position of the scatterer on the IPP. This is what a focusing technique allows and the interval *T* is then called Coherent Processing Interval (CPI).

If the phase history of a scatterer is expanded in Taylor series, it is possible to observe that the larger amount of phase information is contained in the first order term, which can be compensated by simply applying a Fourier Transform to the range-compressed signal. This approach is referred to as the "Unfocused ISAR" and corresponds to a sub-optimum filtering.

As well known, a simple SAR/ISAR processor can store the echoes received from the target (due to transmission of several pulses) in a rectangular format, perform a dechirping operation in the fast time domain and then focus the image using a simple bi-dimensional Fast Fourier Transform (2D-FFT). This is the best that can be done when the motion of the target is unknown. This approach determines blurring effects due to the fact that the integration during the CPI is done without a proper phase compensation and therefore the corresponding peak obtained in this way is not the one with maximum energy and suffers from several effects and is of poor quality.

Moreover, such processing, i.e., the rectangular algorithm, can be applied only in the presence of targets with limited size and when dealing with a resolution not very high. When these hypotheses do not apply, Motion Trough range and azimuth Resolution Cells (MTRC) occurs and the resulting image suffers from blurring effects. The use of a proper focusing technique allows to overcome these problems and compensate the MTRC.

The cross-range resolution of the achieved ISAR image depends on the intrinsic motion characteristics of the target and specifically on its overall change of viewing angle. This implies that, depending on the particular conditions, the achievable resolution can be very poor. With reference to the case of ship target imaging, this condition can occur in presence of a low sea state inducing very limited rotations: in this case the limited rotational motion can result in a very low cross-range resolution. This is especially a problem with respect to side-view images. In fact, whereas top-view images can be obtained by both the SAR technique and the ISAR technique (or even by hybrid SAR/ISAR), side-view images are characteristic of the ISAR technique and are considered also the most useful for Non Cooperative Target Recognition (NCTR).

Moreover, the limited rotational motion can not be compensated by the use of a long integration time since the constraint of keeping the ship rotation axis fixed usually requires the choice of a short CPI. These circumstances can have particularly negative implications on the quality of the achievable ISAR images and, as a consequence, on the performance of NCTR procedures.

Known ISAR imaging methods and systems suffering from the above-cited drawbacks are disclosed in:
- D. Pastina et al., "Multistatic and MIMO Distributed ISAR for enhanced Cross-Range resolution of rotating targets", IEEE Transactions on Geoscience and Remote Sensing, vol. 48, no. 8, 1 August 2010, pages 3300-3317 (in the following identified, for the sake of description simplicity, as D1);
- D. Pastina et al., "Multi-platform ISAR for flying formation", Radar Conference, 4 May 2009, pages 1-6 (in the following identified, for the sake of description simplicity, as D2);
- US 7 119 732 B1 (in the following identified, for the sake of description simplicity, as D3);
- M. Martorella et al., "Advances in Bistatic Inverse Synthetic Aperture Radar", International Radar Conference, 12 October 2009, pages 1-6 (in the following identified, for the sake of description simplicity, as D4);
- X. Bai et al., "Scaling 3-D Image of Spinning Space Debris via Inverse Synthetic Aperture Radar", IEEE Geoscience and Remote Sensing Letters, vol. 7, no. 3, 1 July 2010, pages 430-434 (in the following identified, for the sake of description simplicity, as D5); and
- G. Ginolhac et al., "Multifrequency and multistatic inverse aperture radar, with application to FM passive radar", EURASIP Journal on Advances in Signal Processing, vol. 2010, 1 January 2010, pages 1-13 (in the following identified, for the sake of description simplicity, as D6).

In particular, both D1 and D2 disclose a system of platforms organized in a multi-aspect configuration (i.e., with different aspect angles, and one and the same grazing angle) suitable for enhancing cross-range resolution of ISAR images of target undergoing yaw motions. Moreover, both D1 and D2 disclose also a centralized focusing technique based on Range Migration Algorithm (RMA).

Furthermore, D3 discloses a multiple-bistatic-acquisitions-based system for detecting and identifying a target in close proximity to an orbiting satellite. According to D3, an electromagnetic fence is established to surround the satellite, using a ground-based communication uplink from a gateway antenna. A contact or breach of the electromagnetic fence by the target is detected by the satellite, or at other sensor locations, and an exact position, range and ISAR image of the target is calculated using scattered RF energy from the fence. Identification data is transmitted to satellite system monitors, whereby the data is used to decide on a corrective course of action.

Moreover, D4 discloses bistatic geometries for scenarios where multiple separated transmitters and receivers are employed as well as when illuminators of opportunity are exploited.

Additionally, D5 discloses, in 3-D ISAR imaging of spinning space debris, scaling of an ISAR image by a factor determined by the angle between the spinning vector and the radar LOS. In particular, D5 describes a 3-D image scaling algorithm based on the connections between the mono- and bistatic echoes of the same scatterer.

Finally, D6 discloses imaging of a moving target by using a multifrequency and multistatic passive radar system consisting in one receiver and a great number of narrowband transmitters of opportunity. In particular, D6 describes:
- a first multistatic ISAR processor, which models the target as a set of isotropic points and performs a coherent sum of the bistatic images; and
- a second multistatic ISAR processor, which models the target as a set of non-isotropic points and performs an incoherent sum of the bistatic images.

### OBJECT AND SUMMARY OF THE INVENTION

The objective of present invention is then to provide an ISAR imaging method and system which, in general, alleviates at least in part the above cited drawbacks, and, in particular, provides ISAR side-view images suited for NCTR also for targets undergoing limited rotational motions, for example ship targets in presence of a low sea state.

This objective is achieved by the present invention in that it relates to an ISAR imaging method and system, as defined in the appended claims.

### BRIEF DESCRIPTION OF THE DRAWINGS

For a better understanding of the present invention, preferred embodiments, which are intended purely by way of example and are not to be construed as limiting, will now be described with reference to the attached drawings (all not to scale), wherein:
- Figure 1 shows schematically a typical single-sensor-based ISAR imaging geometry;
- Figure 2 shows an example multi-sensor-based, specifically multi-grazing, ISAR imaging geometry according to the present invention;
- Figure 3 shows schematically two alternative example arrangements of radar sensors of a multi-grazing ISAR imaging system according to the present invention;
- Figure 4 shows schematically a distributed ISAR concept for enhanced cross-range resolution for side-component of an ISAR image for two example embodiments of the present invention;
- Figure 5 shows schematically a first stage of a processing procedure for focusing ISAR images with improved cross-range resolution according to a preferred embodiment of the present invention;
- Figures 6 and 7 show schematically two alternative implementations of further stages of said processing procedure for focusing ISAR images with improved cross-range resolution according to said preferred embodiment of the present invention;
- Figure 8 shows schematically how an output rectangular grid definition in a Polar to Cartesian interpolation changes between the two alternative implementations shown in Figures 6 and 7;
- Figure 9 shows schematically a definition of input and output axes in the Polar to Cartesian interpolation of the implementation shown in Figure 7;
- Figures 10 and 11 show, respectively, a plan-view schematic representation and a side-view schematic representation of a ship;
- Figure 12 shows an ISAR side-view image of the ship showed in the schematic representations of Figures 10 and 11, which has been obtained with a conventional single-sensor-based ISAR technique;
- Figures 13 and 14 show two ISAR side-view images of the ship showed in the schematic representations of Figures 10 and 11, which has been obtained with a Multi Input Multi Output (MIMO), multi-grazing ISAR imaging method according to the present invention; and
- Figure 15 shows a comparison among cross-range cuts of the conventional single-sensor-based ISAR technique used to obtain the ISAR image of Figure 12, and of the MIMO, multi-grazing ISAR imaging method used to obtain the ISAR images of Figures 13 and 14.

### DETAILED DESCRIPTION OF PREFERRED EMBODIMENTS OF THE INVENTION

The following discussion is presented to enable a person skilled in the art to make and use the invention. Various modifications to the embodiments will be readily apparent to those skilled in the art, without departing from the scope of the present invention as claimed.

In general, in order to counteract the above cited drawbacks of the traditional ISAR imaging methods and systems and to increase the cross-range resolution of ISAR images, the present invention teaches to observe a target from multiple view angles by means of multiple radar sensors carried by multiple airborne/spaceborne platforms and to exploit radar signals received by said multiple radar sensors. In fact, if the radar sensors are appropriately spaced, each scatterer of a target can be globally observed from an observation angle that is much wider than for a single aperture and therefore an ISAR image with a higher resolution can be obtained.

In particular, with reference to targets undergoing rotational motions characterized by horizontal effective rotation rate vectors *ω̅_{E}*, such as ships at sea undergoing pitch and roll motions, an ISAR image with a higher resolution can be obtained exploiting a plurality of radar sensors observing the targets with different grazing angles, while, with reference to targets undergoing rotational motions characterized by vertical effective rotation rate vectors *ω̅_{E}*, therefore undergoing mainly yaw motions, an ISAR image with a higher resolution can be obtained exploiting a plurality of radar sensors observing the targets with different aspect angles.

In the following, for the sake of description simplicity, an ISAR imaging method/system exploiting a plurality of radar sensors observing a target with different grazing angles will be called multi-grazing ISAR imaging method/system, and an ISAR imaging method/system exploiting a plurality of radar sensors observing a target with different aspect angles will be called multi-aspect ISAR imaging method/system.

In particular, a multi-grazing ISAR imaging method/system providing improved cross-range resolution ISAR side-view images of targets undergoing pitch and roll motions according to the present invention will be described in detail in the following.

Moreover, preferably, the present invention, in order to get well-focused ISAR images, also teaches to apply an appropriate multi-channel focusing technique to the distributed ISAR data, i.e., radar signals received by the multiple radar sensors. In fact, a proper multi-channel focusing technique is preferably implemented in order to correctly compensate phase terms of each single echo before integrating them to achieve the maximum energy of the useful signal in the image domain.

Therefore, according to a preferred embodiment of the present invention, the multi-grazing ISAR imaging method/system exploits a multi-channel focusing technique that will be also described in detail in the following.

In general, according to the present invention, a multi-grazing ISAR imaging method/system exploits a set of *S* airborne/spaceborne platforms, with *S*≥*2,* each equipped with a corresponding radar sensor configured to transmit, or receive, or both transmit and receive wide-bandwidth pulse radar signals. The airborne/spaceborne platforms can comprise aircrafts, Unmanned Aerial Vehicles (UAVs), helicopters, spacecrafts, satellites, etc.

Moreover, all the *S* radar sensors are assumed to have an antenna appropriately steered toward a moving target to be imaged whose own rotational motion is exploited to form an ISAR image.

In particular, the multi-grazing ISAR imaging system according to the present invention comprises *S* (with *S*>*1*) radar sensors each intended to be carried by a respective airborne/spaceborne platform, at least one of the *S* radar sensors being configured to illuminate a target with radar signals such that to allow to form an ISAR image, and all the *S* radar sensors being configured to receive the radar signals back-scattered by the illuminated target.

Moreover, the multi-grazing ISAR imaging system is configured so as to guarantee the phase coherence among the signals from the single radar sensors. The radar signals received by the single radar sensors are assumed to be properly calibrated so as to compensate for different signal levels which characterize signals of comparable power backscattered by the same target at different distances.

In detail, the multi-grazing ISAR imaging method/system can, preferably, exploit, in a first embodiment addressed in the following as multistatic, multi-grazing ISAR imaging method/system, only one airborne/spaceborne platform carrying an active radar sensor, i.e., a transmitting/receiving radar sensor, while the other *S*-*1* air/space platforms carry receiving-only radar sensors. In this first embodiment all the *S* involved radar systems can be, conveniently, single-receiving-channel-based radar sensors, i.e., can be, conveniently, configured to extract from the received radar signals a signal related to a radar waveform transmitted by the only active radar sensor and backscattered by the illuminated target.

Alternatively, the multi-grazing ISAR imaging method/system can, preferably, exploit, in a second embodiment addressed in the following as Multiple Input Multiple Output (MIMO), multi-grazing ISAR imaging method/system, *S* air/space platforms carrying *P* active radar sensors (i.e., transmitting/receiving radar sensors), with *2* ≤ *P* ≤ *S*, each autonomously transmitting a corresponding radar waveform among *P* mutually separable, i.e., almost orthogonal, radar waveforms. Conveniently, in this second embodiment all the *S* involved radar systems can have a number of receiving channels ranging from *1* to *P,* depending on the considered configuration. In particular, each active radar sensor can be conveniently configured to extract from the received radar signals a component related to the corresponding transmitted radar waveform backscattered by the illuminated target and can be, more and more conveniently, further configured to extract from the received radar signals also one or more component(s) each related to the radar waveform transmitted by one of the other *P*-*1* active radar sensors and backscattered by the illuminated target, while the other *S-P* receiving-only radar sensors can be conveniently configured to extract from the received radar signals one or more component (s) each related to the radar waveform transmitted by one of the *P* active radar sensors and backscattered by the illuminated target.

Figure 2 shows an example embodiment of an ISAR imaging system implementing the multi-grazing ISAR imaging method according to the present invention.

In particular, according to the example embodiment shown in figure 2, the ISAR system comprises four flying airborne platforms, in particular a helicopter 21, a first UAV 22, a second UAV 23 and a third UAV 24, at least one of which is equipped with a transmitting/receiving radar sensor (not shown in figure 2) transmitting radar signals that illuminate a target 25, specifically a ship which is at sea, considered, for ISAR imaging purposes, as a rigid body undergoing a rotational motion around its fulcrum (not shown in figure 2). Moreover, each airborne platform 21, 22, 23, 24 is equipped with a corresponding radar sensor (not shown in figure 2) configured to receive the radar signals back-scattered by the ship 25.

Furthermore, the figure 2 shows also a Cartesian reference system *XYZ* centred on the fulcrum of the ship 25 and defined by two perpendicular axes, namely a first, or longitude-related, axis *X* and a second, or latitude-related, axis *Y*, lying on a plane, namely a horizontal plane *XY,* tangent to the Earth's surface, and by a third, or height-related, axis Z perpendicular to the horizontal plane *XY.* As shown in figure 2, all the airborne platforms 21, 22, 23, and 24, are located in such a way that their projections onto the horizontal plane *XY* lie on one and the same line passing through the origin of the Cartesian reference system *XYZ,* i.e., the fulcrum of the ship 25. In other words, all the radars carried by the airborne platforms 21, 22, 23, and 24 observe the ship 25 with one and the same aspect angle *ζ* defined, for each airborne platform, as the angle between the longitude-related axis *X* and the projection onto the horizontal plane *XY* of the respective Line Of Sight (LOS), i.e., the respective line linking the fulcrum of the ship 25 and the phase centre of the antenna of the corresponding radar sensor of the air platform.

Moreover, as always shown in figure 2, the airborne platforms 21, 22, 23, and 24 observe the ship 25 with different grazing angles. In particular, considering each airborne platform among the air platforms 21, 22, 23, and 24, the corresponding grazing angle with which the considered airborne platform observes the ship 25 is defined as: ${ψ}_{i} = arcsin \left(\frac{{Z}_{i}}{{R}_{i}}\right) ,$
where i denotes the considered airborne platform (i.e., *i* = *21, 22, 23, 24,* respectively), *ψᵢ* denotes the corresponding grazing angle, *Zᵢ* denotes an elevation distance, along the height-related axis *Z* direction, between the fulcrum of the ship 25 and the phase centre of the antenna of the corresponding radar sensor of the considered airborne platform, and *Rᵢ* denotes a slant range distance, along the respective LOS direction of the corresponding radar sensor of the considered airborne platform, between the fulcrum of the ship 25 and the phase centre of the antenna of the corresponding radar sensor of the considered airborne platform.

As previously described, the target 25 is considered as a rigid body undergoing a rotational motion around its fulcrum. The rotation of a rigid body is usually a three-dimensional motion that can be decomposed in three components: yaw, pitch, and roll. According to what has been previously stated, the yaw describes a rotation of the target 25 around the height-related axis *Z,* the roll describes a rotation of the target 25 around the longitude-related axis *X* (for a ship this axis corresponds to the bow-stern axis), and the pitch describes a rotation of the target 25 around the latitude-related axis *Y.*

Considering an *k*-*th* (with *k*=*1* in the multistatic, multi-grazing ISAR imaging system, while *k*=*1,..., P* in the MIMO, multi-grazing ISAR imaging system) radar sensor transmitting the radar waveform *wₖ*(*t*) and an *l-th* (with *l=1,..., S*) radar sensor receiving said radar waveform *wₖ*(*t*), it's possible to define an *n*-*th* equivalent radar sensor, which is a real radar sensor located in a real position corresponding to the position of the radar sensor itself in the case of a monostatic observation, i.e., couple (*k*,*k*), and a fictitious radar sensor located in a fictitious position in the case of a bistatic observation, i.e., couple (*k*,*l*) with *k*≠*l*, said fictitious position being located in the bisector of the TX/RX couple (*k*,*l*) and its distance from the scene centre being equal to the half-sum of the TX and RX distances from the observed scene centre.

In particular, it is considered a formation, i.e., an arrangement, whose equivalent radar sensors are characterized by different equivalent grazing angles *ψₙ* defined as the mean value of the grazing angles of the real radar sensors in the TX/RX couple *k*/*l*, that is ${ψ}_{n} = {ψ}_{k , l} = \frac{{ψ}_{k} + {ψ}_{l}}{2} ,$
and by different bistatic angles χ*ₙ* defined as the half-difference of the grazing angles of the real radar sensors in the TX/RX couple *k*/*l*, that is ${χ}_{n} = {χ}_{k , l} = \frac{{ψ}_{k} + {ψ}_{l}}{2} .$

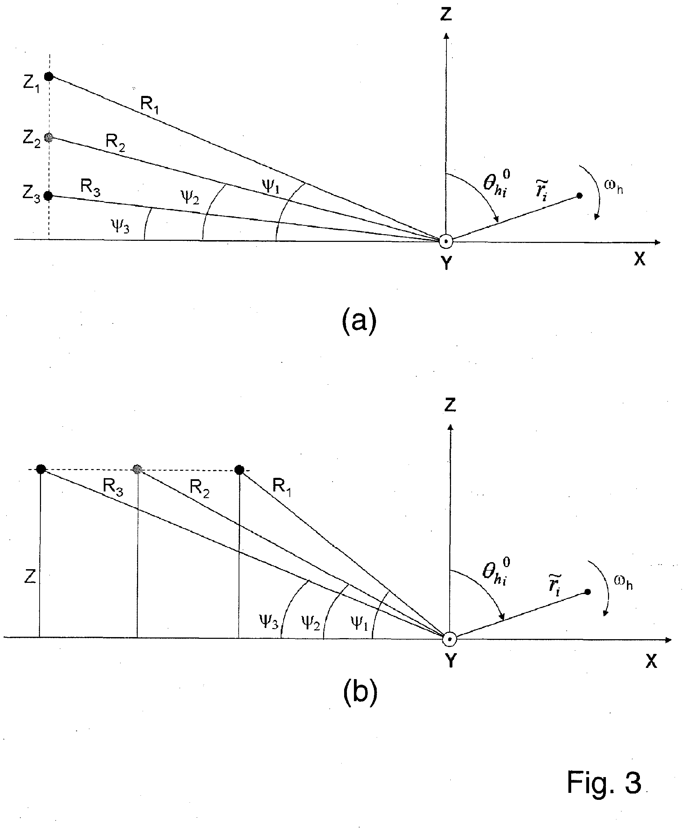

As example, figure 3 shows schematically that this multi-grazing formation (or arrangement) of radar sensors can be practically obtained by considering several airborne/spaceborne platforms aligned on one and the same direction parallel to the height-related axis *Z* at different heights *Z₁*, *Z₂*, and *Z₃*, as shown in figure 3(a), or aligned on one and the same horizontal direction (for example parallel to the longitude-related axis *X*) corresponding to one and the same aspect angle but at different (slant range) distances *R₁*, *R₂*, *R₃* from the fulcrum of the target to provide different grazing angle values, as shown in figure 3(b).

The received signal (after range compression and supposing that the Range Cell Migration (RCM), if present, and the Translational Motion, have been already compensated) from the *i-th* scatterer of the target can be written as ${s}_{n} \left(t\right) = {r}^{- j ⁢ \frac{4 ⁢ π}{λ} ⁢ \left[{R}_{n}+{{r}^{˜}}_{i}⁢sin\left({θ}_{{h}_{i}}^{0}-{ψ}_{n}+{ω}_{h}⁢t\right)⁢cos{χ}_{n}\right]} {rect}_{T} \left(t\right)$
where *r̃ᵢ* denotes the modulus of the projection of position vector *r̅ᵢ* of the *i*-*th* scatterer of the target on the plane *XZ*, the angle ${θ}_{{h}_{i}}^{0}$ denotes the angle between the height-related axis Z and the vector *r̅ᵢ*, as shown in figure 3, and *ωₕ* is the value of the horizontal component of the effective rotation rate vector *ω̅_{E}* at the imaging time, i.e. at the centre of the CPI of duration *T.*

Assuming that the target is undergoing a horizontal motion (i.e., the effective rotation rate vector *ω̅_{E}* lies on the horizontal plane *XY)* provided by the combination of pitch and roll rotation motions and denoting with *θₕᵢ*(*t*) the angle changing with time swept by the *i-th* scatterer around the horizontal axis *H* (recalling the second Cartesian reference system *RHV* shown in figure 1) it can be proven that a considerably higher value of the global angular aperture can be obtained by jointly exploiting the different observations done from the different radar sensors. To show this concept reference is made to the case of *N_{eq}* equivalent radar sensors, namely equivalent radar sensor *n* with *n*=*1*,..., *N_{eq}.* While each equivalent radar sensor independently observes the *i-th* scatterer with an angle *Δθₕ = ωₕT*, two observation angles from two generic equivalent radar sensors are not totally overlapped. Specifically, the time varying value of the observation angle experienced by two adjacent equivalent radar sensors *n* and *n*-*1* is given by the following expressions: $\begin{matrix}{θ}_{hi}^{n} \left(t\right) = {θ}_{hi}^{0} - {ψ}_{n} + {ω}_{h} ⁢ t & - T / 2 \leq t \leq T / 2 \\ {θ}_{hi}^{n - 1} \left(t\right) = {θ}_{hi}^{0} - {ψ}_{n - 1} + {ω}_{h} ⁢ t & - T / 2 \leq t \leq T / 2\end{matrix}$
with $n = 1 , … , {N}_{eq} .$

The global change of the grazing angle for the scatterer, observed by radar sensors *n* and *n*-*1*, is given by ${ψ}_{n - 1} - {ψ}_{n} \leq {ω}_{h} ⁢ T$
for every value of *n.*

This imposes an upper bound for global observation angle and achievable cross-range resolution, corresponding to the number of equivalent radar sensors *N_{eq}*: $Δ ⁢ {θ}_{{h}_{eff}}^{\left({N}_{eq}\right)} = {ω}_{h} ⁢ T + \left({N}_{eq}-1\right) ⁢ {ω}_{h} ⁢ T = Δ ⁢ {θ}_{h} + \left({N}_{eq}-1\right) ⁢ Δ ⁢ {θ}_{h} = {N}_{eq} ⁢ Δ ⁢ {θ}_{h}$ $Δ ⁢ {cr}^{\left({N}_{eq}\right)} = \frac{λ}{2 ⁢ Δ ⁢ {θ}_{{h}_{eff}}^{\left({N}_{eq}\right)}} = \frac{λ}{2 ⁢ \left({ω}_{h}⁢T+{ψ}_{1}-{ψ}_{{N}_{eq}}\right)} \geq \frac{λ}{2 ⁢ {N}_{eq} ⁢ Δ ⁢ {θ}_{h}}$

To quantify the resolution improvement, a parameter *γ* can be defined as the ratio between the global synthesized change of observation angle and the change of observation angle of the single radar sensor: ${γ}_{h} = \frac{Δ ⁢ {θ}_{{h}_{eff}}^{\left({N}_{eq}\right)}}{Δ ⁢ {θ}_{h}} = \frac{Δcr}{Δ ⁢ {cr}^{\left({N}_{eq}\right)}} \leq {N}_{eq}$

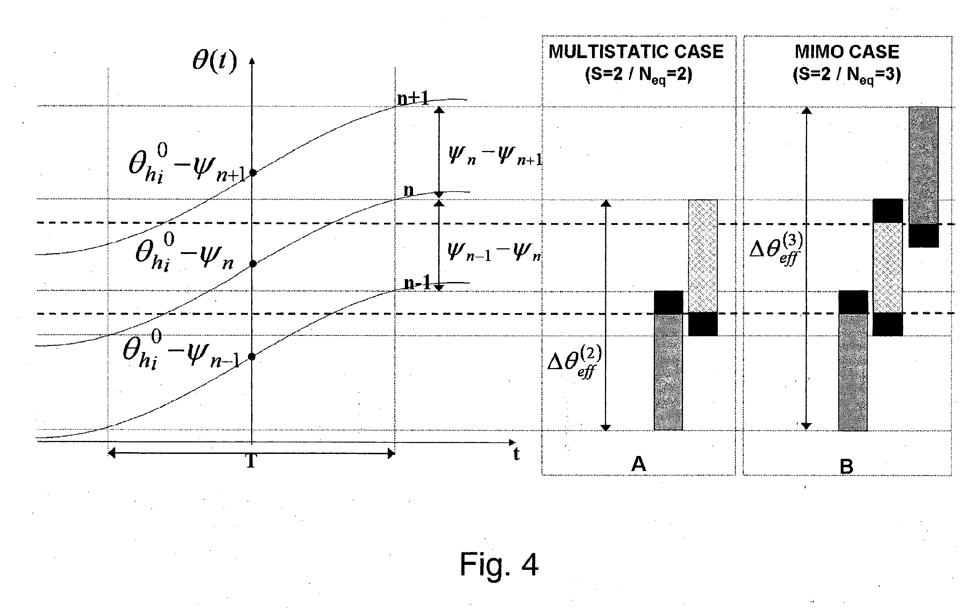

Relating to this, figure 4 shows schematically a distributed ISAR concept for enhanced cross-range resolution for side component of an ISAR image for two example embodiments of the present invention. In particular, in figure 4 a formation with *S=2* airborne/spaceborne platforms is considered. In detail, in figure 4 it is possible to see how, considering a bistatic configuration, a maximum increase in cross-range resolution *γₕ* = 2 can be achieved, while, in a MIMO case, a maximum improvement in cross-range resolution *γₕ* = *3* is achievable, if the radar sensors in the formation are located so as to be maximally separated in angle, without at the same time introducing gaps in the overall angular distributed observation.

If the observed target is undergoing a three-dimensional (3D) motion (assuming the rotation axis fixed during the CPI) with a not negligible yaw, the rotation rate vector *ψ̅_{E}* can be always decomposed into a vertical and a horizontal component (rotations around the LOS are discarded since the radar sensors are not sensitive to them), as described in D. Pastina, C. Spina, Slope-based frame selection and scaling technique for ship ISAR imaging, IET Signal Processing Journal, 2008, Vol. 2, Iss. 3 , pp. 265-276. In this case the equation (6) would concern the side component of the image (arising from the horizontal component, i.e. along the horizontal axis *H,* of the effective rotation vector *ψ̅_{E}*) whereas no cross-range resolution improvement is obtained for the plan component of the image (arising from the vertical component, i.e. along the vertical axis *V,* of the effective rotation vector *ψ̅_{E}*) by the considered multi-grazing system. Therefore the global cross-range resolution improvement obtained for the ISAR image can be written as follows: ${γ}_{hv} = \sqrt{{ω}_{v}^{2} + {γ}_{h}^{2} ⁢ {ω}_{h}^{2}} / \sqrt{{ω}_{v}^{2} + {ω}_{h}^{2}} = {γ}_{n} ⋅ \sqrt{1 + {ρ}_{vh}^{2} / {γ}_{h}^{2}} / \sqrt{1 + {ρ}_{vh}^{2}}$
where *ρᵥₕ* = *ωᵥ* / *ωₕ*, *ωₕ* denotes, as previously said, the horizontal component of the rotation rate vector *ω̅_{E}*, while *ωᵥ* denotes the vertical component of the rotation rate vector *ω̅_{E}*, and *γₕ* denotes the cross-range resolution improvement defined in the equation (6). From the equation (7) it results that *γₕᵥ≤γₕ≤N_{eq}* when *ρᵥₕ* ≥ 0, whereas it results *γᵥₕ* → *γₕ* when *ρᵥₕ* → *0*, namely when the horizontal component *ωₕ* is the dominant one.

Therefore, as previously described, the ISAR imaging method according to the present invention allows to form a high-resolution ISAR image of a rotating target by means of a multi-angle arrangement of the *S* radar sensors with respect to said target, said high-resolution ISAR image being formed on the basis of the radar signals backscattered by said target and received by the *S* radar sensors.

In particular, the ISAR imaging method allows to form a high-resolution ISAR side-view image of the target by means of a multi-grazing arrangement of the *S* radar sensors with respect to said target.

In detail, the ISAR imaging method comprises processing the radar signals backscattered by the target and received by the *S* radar sensors so as to form said high-resolution ISAR side-view image of the target.

More and more in detail, the ISAR imaging method comprises a multi-channel focusing technique, in particular a bi-dimensional (2D) processing technique, such as to properly combine the radar signals received by the *S* radar sensors and to correct the Migration Through range and Doppler Resolution Cells. It has to be noticed that, even when the resolution value and the target size do not require a compensation of the Migration Through range and Doppler Resolution Cells (for example an unfocused ISAR can be sufficient for a single radar sensor), it is however preferable to apply a 2D processing technique to combine the radar signals received by multiple radar sensors.

The approach proposed here is a decentralized technique for multi-angle ISAR focusing: this approach first focuses *N_{eq}* low-resolution ISAR images, as collected by each single equivalent radar sensor, with an appropriate single-equivalent-sensor-based focusing technique and then combines them coherently to achieve a high-resolution ISAR image. The decentralized approach has the main advantage of providing not only the final ISAR image with improved cross-range resolution but also the different ISAR images (with lower resolution) corresponding to the different single equivalent radar sensors.

It should be noticed that the multi-channel focusing technique can be applied not only to the case of multi-grazing ISAR to obtain profile, or side-view, ISAR images with improved cross-range resolution, but also to multi-aspect ISAR to get improved plan, or top-view, ISAR images. Since the use of a multi-grazing system allows to solve the practical problem of poor cross-range resolution ISAR images for the case of ships at sea, which is the principal operational situation that would require the use of a multi-sensor system, the multi-channel focusing technique is here described only for the multi-grazing case, although, as just said, it can be advantageously applied also to the multi-aspect case.

Therefore, in the following only motions characterized by a horizontal rotation rate vector *ω̅_{E}*, as arising from pitch and roll motions, will be taken into account for describing the multi-channel focusing technique.

It has to be noticed that the proposed multi-channel focusing technique focuses on the exploitation of the rotational motion suitable for ISAR image formation, therefore under the hypothesis that the translational motion between the phase center of each antenna and the fulcrum of the target has already been compensated or is properly compensated while performing the multi-channel focusing technique described in the following.

In particular, the multi-channel focusing technique comprises, at a first stage, applying a Fast-Time Compression to the *S* radar signals received by the *S* real radar sensors so as to extract therefrom *N_{eq}* signals each related to a corresponding equivalent radar sensor, being *N_{eq}*≥*S*.

In detail, according to what has been previously said about the multistatic, multi-grazing ISAR imaging case, the multi-channel focusing technique comprises, for each real radar sensor of the multistatic, multi-grazing ISAR imaging system, applying a Fast-Time Compression to the radar signals received by said real radar sensor so as to extract therefrom a component, i.e., a signal, related to the radar waveform transmitted by the only real active radar sensor and backscattered by the illuminated target. The signal extracted from the radar signals received by each of the *S-1* real receiving-only radar sensors is related to a corresponding equivalent radar sensor defined by the bistatic couple made up of said considered real receiving-only radar sensor and the only real active radar sensor (aforesaid bistatic observation case), while the signal extracted from the radar signals received by the only real active radar sensor is related to an equivalent radar sensor corresponding to said only real active radar sensor (aforesaid monostatic observation case). Therefore, in the multistatic case results that *N_{eq}=S.*

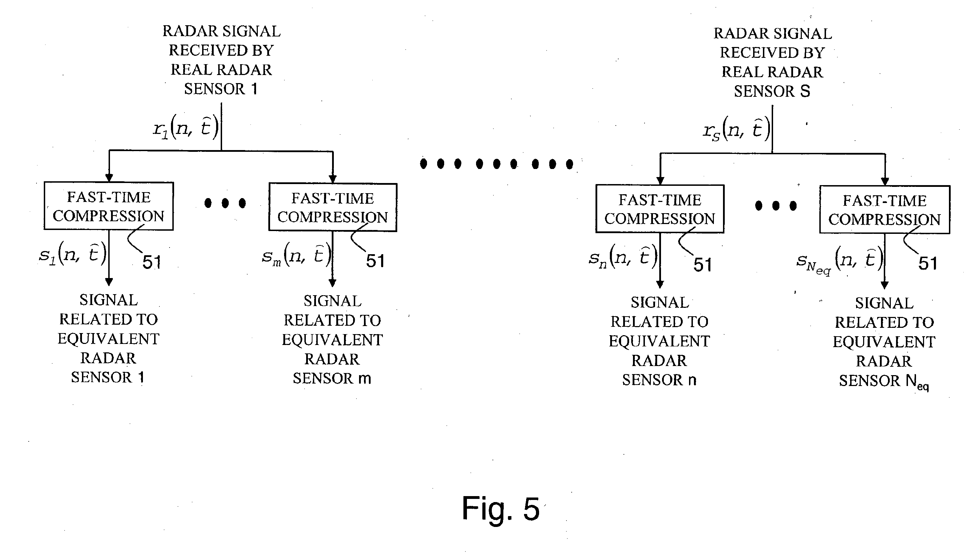

On the other hand, figure 5 shows a flowchart representing the first stage of the multi-channel focusing technique in the MIMO, multi-grazing ISAR imaging case.

In particular, as shown in figure 5 and according to what has been previously said about the MIMO, multi-grazing ISAR imaging case, the multi-channel focusing technique comprises, for each real radar sensor, applying one or more Fast-Time Compression(s) (blocks 51) to the radar signals received by said real radar sensor so as to extract therefrom one or more component(s), i.e., a signal(s), each related to the radar waveform transmitted by one of the P real active radar sensors and backscattered by the illuminated target. Each signal extracted from the radar signals received by each of the *S-P* real receiving-only radar sensors is related to a corresponding equivalent radar sensor defined by the bistatic couple made up of said considered real receiving-only radar sensor and the real active radar sensor that has transmitted the radar waveform which said extracted signal is related to (aforesaid bistatic observation case). Instead, for each of the P real active radar sensors results that:
- one signal is extracted from the radar signal received by said real active radar sensor, that is related to the corresponding radar waveform transmitted by said real active radar sensor and backscattered by the illuminated target and is, thus, related also to an equivalent radar sensor corresponding to said real active radar sensor (aforesaid monostatic observation case); and,
- conveniently, also one or more further signal(s) can be extracted from the radar signal received by said real active radar sensor, each further extracted signal being related to the radar waveform transmitted by one of the other *P*-*1* real active radar sensors and backscattered by the illuminated target and being, thus, related also to an equivalent radar sensor defined by the bistatic couple made up of said considered real active radar sensor and the real active radar sensor that has transmitted the radar waveform which said further extracted signal is related to (aforesaid bistatic observation case).

Therefore, in the MIMO case results that *N_{eq}≥S.*

Moreover, in both the multistatic case and the MIMO case, the Fast-Time Compression can be of two different types:
a) Matched-Filtering-based Fast-Time Compression; or
b) Dechirping-based Fast-Time Compression.

Conveniently, in the Matched-Filtering-based Fast-Time Compression, the signals received by the real radar sensors are cross-correlated with first proper reference signals so as to extract therefrom the signals related to the equivalent radar sensors.

Conveniently, in the Dechirping-based Fast-Time Compression, the signals received by the real radar sensors are dechirped with second proper reference signals so as to extract therefrom the signals related to the equivalent radar sensors and a pre-processing operation of range deskew is performed to remove residual video phase arising from the deramping procedure. Moreover, if multiple radar waveforms are used by the multi-angle, in particular multi-grazing, ISAR imaging system (i.e., in the MIMO case), proper Range Deskew procedures and frequency reversal steps are needed in order to have all the dechirped data related to the different equivalent radar sensors aligned on a common range-frequency axis.

In both the Matched-Filtering-based Fast-Time Compression and the Dechirping-based Fast-Time Compression, after pulse compression, for each slow-time pulse, procedures of removal of fast-time samples and of pass-band filtering, in range dimension, can be applied. The first procedure, i.e., fast-time samples removal, aims at leaving, for the following processing, a number of fast-time samples corresponding to the actual range swath in the image, that is much smaller than the range corresponding to the gathering window considered. The second procedure, i.e., pass-band filtering, limits the frequency axis of the data set to be focused that is generally larger than the frequency bandwidth of the transmitted signal.

If the Fast-Time Compression takes place via matched filtering, a range Fourier Transform is applied to provide the output data in the range-frequency domain, which, on the other hand, is automatically provided when dechirping is applied.

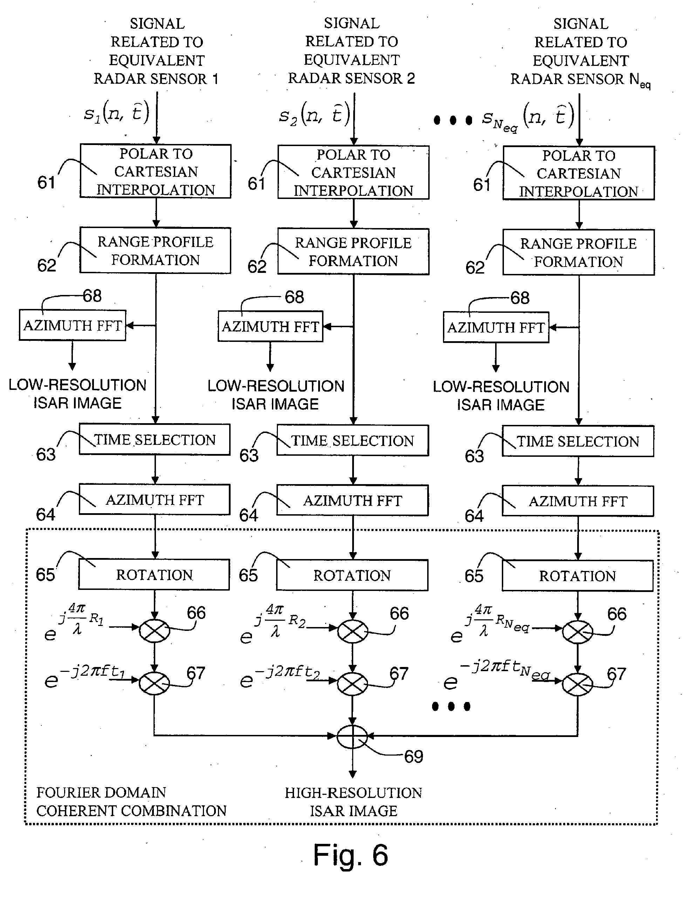

Furthermore, in both the multistatic case and the MIMO case, the multi-channel focusing technique, as shown in figure 6, further comprises, for each equivalent radar sensor, a respective single-equivalent-sensor-based (or single-channel) processing procedure which is applied to signals related to said equivalent radar sensor, and comprises the following steps:
1) Polar to Cartesian Interpolation (block 61);
2) Range Profile Formation (block 62);
3) Time Selection (block 63);
4) Azimuth Fourier Transform (block 64) to go in Doppler/cross-range domain;
5) Rotation and Scaling (block 65);
6) Phase Alignment (multiplier 66); and
7) Time Alignment (multiplier 67).

With regard to the Polar to Cartesian Interpolation step (block 61), typically in ISAR observations each pulse's return is recorded at an angle in the spatial-frequency domain related to the angle rotation *θₕ*(*k*·*PRT*) of the scene and at a radial position proportional to the instantaneous transmitted frequency *f_{c}+f*. It is possible to say that data are recorded on a polar support. Although image focusing using a simple 2D FFT procedure is possible, however the 2D FFT procedure needs a rectangular grid of uniformly spaced data samples and this implies a re-sampling operation to pass from the polar grid to the rectangular one. This is in general achieved using two separate one-dimensional interpolation steps. This mapping from Polar to Cartesian (block 61) removes the range and Doppler migration from single-sensor-based data.

With regard to the Range Profile Formation step (block 62), after the Polar to Cartesian mapping (block 61), the data are transformed from the range-frequency domain to the range domain (meters) via a Fourier Transform direct or inverse depending on which Fast-Time Compression procedure has been applied in the first stage of the multi-channel focusing technique.

At this step (block 62) of the single-equivalent-sensor-based processing procedure, a low-resolution single-equivalent-sensor-based ISAR image can be obtained as intermediate output by applying an Azimuth Fourier Transform (block 68) to the data coming from the Range Profile Formation step (block 62).

The remaining steps of the single-equivalent-sensor-based processing procedure described in the following, i.e., the Time Selection step (block 63), the Azimuth Fourier Transform step (block 64), the Rotation and Scaling step (block 65), the Phase Alignment step (multiplier 66), and the Time Alignment step (multiplier 67), refer specifically to the processing of the multi-angle data, namely they are the processing steps needed to properly combine the single-equivalent-sensor-based low-resolution ISAR images into the final ISAR image with improved cross-range resolution.

In particular, with regard to the Time Selection step (block 63), when the observations from the different equivalent radar sensors are partially overlapped, i.e. when *ψₙ₋₁ - ψₙ* ≤ *ωₕT*, it is necessary to reduce the integration time (CPI) for the individual equivalent radar sensors by discarding a part of the observation data from the time *T* down to *Tₙ,* such that *ωₕTₙ* = *ψₙ - ψₙ₋₁*. The signal for the *n-th* equivalent radar sensor after the Time Selection (block 63) is ${w}_{n} \left(t\right) = {s}_{n} \left(t\right) ⋅ {rect}_{{T}_{n}} ⁢ \left(t+Δ⁢{t}_{n}\right)$
where *t* denotes the slow-time and *Δtₙ* denotes the shift of the central instant occurring when the windowing procedure discards asymmetrically portions of the *n-th* observation, as it always happens for *s₁(t)* and *s_{Neq}(t)*. Since the range migration in the single-equivalent-sensor-based low-resolution ISAR images has been removed by the previous processing steps, in the equation (8) only the dependence of the signal from the slow-time has been highlighted so that *sₙ(t)* and *wₙ(t)* refer both to the specific slant range bin containing the scatterer. However, since the different equivalent radar sensors are observing the target from different angles thus giving rise to different IPPs, the position of the range bin, with respect to the target fulcrum, containing the same scatterer generally will change moving from one equivalent radar sensor to another equivalent radar sensor (the *i-th* scatterer is imaged in range position ${x}_{{r}_{i}}^{n}$ depending on the equivalent radar sensor).

Moreover, the Azimuth Fourier Transform step (block 64) allows to go from data in the range & azimuth-frequency domain to data in the range & azimuth (or cross-range) domain, i.e. the image domain. By considering the Fourier Transform of the signal *wₙ(t)* defined by the equation (8) it is possible to see how the *i*-*th* scatterer is imaged in the cross-range position ${x}_{{cr}_{i}}^{n} = {{r}^{˜}}_{i} ⁢ cos \left({θ}_{hi}-{ψ}_{0}\right) ,$ depending on the equivalent radar sensor grazing angle *ψₙ* and scaled by the factor *cos*(*χₙ*).

In particular, the Fourier Transform of the signal *wₙ(t)* is defined as: $\begin{matrix}{W}_{n} \left(t\right) = {\int }_{- ∞}^{∞} {e}^{- j ⁢ \frac{4 ⁢ π}{λ} ⁢ \left[{R}_{n}+{{r}^{˜}}_{i}⁢sin\left({θ}_{{h}_{i}}^{0}-{ψ}_{n}+{ω}_{h}⁢t\right)⁢cos{χ}_{n}\right]} ⋅ {e}^{- j ⁢ 2 ⁢ πft} ⁢ dt * \\ * {\int }_{- ∞}^{∞} {rect}_{{T}_{n}} ⁢ \left(t+Δ⁢{t}_{n}\right) ⋅ {e}^{- j ⁢ 2 ⁢ πft} ⁢ dt \approx \\ \approx {e}^{- j ⁢ \frac{4 ⁢ π}{λ} ⁢ {R}_{n}} {\int }_{- ∞}^{∞} {e}^{- j ⁢ \frac{4 ⁢ π}{λ} ⁢ {{r}^{˜}}_{i} ⁢ \left[sin\left({θ}_{{h}_{i}}^{0}-{ψ}_{n}\right)+cos\left({θ}_{{h}_{i}}^{0}-{ψ}_{n}\right)⁢{ω}_{h}⁢t\right] ⁢ cos {χ}_{n}} ⋅ {e}^{- j ⁢ 2 ⁢ πft} ⁢ dt * \\ * {T}_{n} ⁢ sinc \left[πf⁢{T}_{n}\right] ⋅ {e}^{j ⁢ 2 ⁢ πfΔ ⁢ {t}_{n}} = \\ = {e}^{- j ⁢ \frac{4 ⁢ π}{λ} ⁢ {R}_{n}} ⋅ {e}^{- j ⁢ \frac{4 ⁢ π}{λ} ⁢ {{r}^{˜}}_{i} ⁢ sin \left({θ}_{{h}_{i}}^{0}-{ψ}_{n}\right) ⁢ cos {χ}_{n}} ⋅ {e}^{j ⁢ 2 ⁢ π ⁢ \left(f+\frac{2 ⁢ {ω}_{h}}{λ}⁢{{r}^{˜}}_{i}⁢cos\left({θ}_{{h}_{i}}^{0}-{ψ}_{n}\right)⁢cos{χ}_{n}\right) ⁢ Δ ⁢ {t}_{n}} . \\ ⋅ {T}_{n} ⁢ sinc ⁢ \left[π⁢\left(f+\frac{2 ⁢ {ω}_{h}}{λ}⁢{{r}^{˜}}_{i}⁢cos\left({θ}_{{h}_{i}}^{0}-{ψ}_{n}\right)⁢coqs⁢{χ}_{n}\right)⁢{T}_{n}\right]\end{matrix}$

The Rotation and Scaling step (block 65) is required in order to set the same IPP for the *N_{eq}* low-resolution focused images and to scale the axes as if all the observations were monostatic. In this case, after the interpolation procedure to obtain the rotation, the *i-th* scatterer is placed in the slant-range position *x_{rᵢ}* and in the cross-range position ${x}_{{cr}_{i}} = {{r}^{˜}}_{i} ⁢ cos \left({θ}_{hi}^{0}-{ψ}_{0}\right)$ both not depending on the considered equivalent radar sensor.

The output *Kₙ*(*f*) of the Rotation and Scaling step (block 65) is defined as $\begin{matrix}{K}_{n} \left(f\right) = {e}^{- j ⁢ \frac{4 ⁢ π}{λ} ⁢ {R}_{n}} ⋅ {e}^{- j ⁢ \frac{4 ⁢ π}{λ} ⁢ {{r}^{˜}}_{i} ⁢ sin \left({θ}_{hi}^{0}-{ψ}_{n}\right)} . {e}^{j ⁢ 2 ⁢ π ⁢ \left(f+\frac{2 ⁢ {ω}_{h}}{λ}⁢{{r}^{˜}}_{i}⁢cos\left({θ}_{hi}^{0}-{ψ}_{0}\right)\right) ⁢ Δ ⁢ {t}_{n}} . \\ ⋅ {T}_{n} ⁢ sinc ⁢ \left[π⁢\left(f+\frac{2 ⁢ {ω}_{h}}{λ}⁢{{r}^{˜}}_{i}⁢cos\left({θ}_{hi}^{0}-{ψ}_{0}\right)\right)⁢{T}_{n}\right]\end{matrix}$

The Phase Alignment step (multiplier 66) comprises a multiplication by a phase term due to the distance between the equivalent radar sensor position and the scene centre, as defined by the following equation: $\begin{matrix}{H}_{n} \left(f\right) = {e}^{- j ⁢ \frac{4 ⁢ π}{λ} ⁢ {{r}^{˜}}_{i} ⁢ sin \left({θ}_{hi}^{0}-{ψ}_{n}\right)} . {e}^{j ⁢ 2 ⁢ π ⁢ \left(f+\frac{2 ⁢ {ω}_{h}}{λ}⁢{{r}^{˜}}_{i}⁢cos\left({θ}_{hi}^{0}-{ψ}_{0}\right)\right) ⁢ Δ ⁢ {t}_{n}} . \\ ⋅ {T}_{n} ⁢ sinc ⁢ \left[π⁢\left(f+\frac{2 ⁢ {ω}_{h}}{λ}⁢{{r}^{˜}}_{i}⁢cos\left({θ}_{hi}^{0}-{ψ}_{0}\right)\right)⁢{T}_{n}\right]\end{matrix}$

The Time Alignment step (multiplier 67) is performed by multiplying the low-resolution ISAR images by a phase term corresponding to an appropriate time shift *tₙ* so as to align the time selected observation as the corresponding data where received by a single monostatic equivalent radar sensor.

Finally, as shown in figure 6, the multi-channel focusing technique comprises a Combination step (adder 69) which comprises the sum of all the corrected images obtained by means of all the single-equivalent-radar-sensor-based processing procedures performed on the signals related to the *N_{eq}* equivalent radar sensors.

To correctly understand these last operations the term must be properly rewritten. $\begin{matrix}\frac{4 ⁢ π}{λ} ⁢ {{r}^{˜}}_{i} ⁢ sin \left({θ}_{{h}_{i}}^{0}-{ψ}_{n}\right) = \frac{4 ⁢ π}{λ} ⁢ {{r}^{˜}}_{i} ⁢ sin \left({θ}_{{h}_{i}}^{0}-{ψ}_{n}+Δ⁢{ψ}_{n}\right) = \\ = \frac{4 ⁢ π}{λ} ⁢ {{r}^{˜}}_{i} ⁢ sin \left({θ}_{{h}_{i}}^{0}-{ψ}_{0}\right) ⋅ cos Δ ⁢ {ψ}_{n} + \frac{4 ⁢ π}{λ} ⁢ {{r}^{˜}}_{i} ⁢ cos \left({θ}_{{h}_{i}}^{0}-{ψ}_{0}\right) ⋅ sin Δ ⁢ {ψ}_{n} \approx \\ \approx \frac{4 ⁢ π}{λ} ⁢ {{r}^{˜}}_{i} ⁢ sin \left({θ}_{{h}_{i}}^{0}-{ψ}_{0}\right) + \frac{4 ⁢ π}{λ} ⁢ {{r}^{˜}}_{i} ⁢ cos \left({θ}_{{h}_{i}}^{0}-{ψ}_{0}\right) ⋅ Δ ⁢ {ψ}_{n}\end{matrix}$
where the last equivalence holds when the term Δ*ψₙ* is very small. Defining the central frequency *f₀* as ${f}_{0} = - \frac{2 ⁢ {ω}_{h}}{λ} ⁢ {{r}^{˜}}_{i} ⁢ cos \left({θ}_{{h}_{i}}^{0}-{ψ}_{n}\right)$
and the angular shift Δ*ψₙ* as $Δ ⁢ {ψ}_{n} = {ω}_{h} ⁢ {t}_{n}$
the equation (11) can be rewritten as $\begin{matrix}{H}_{n} \left(f\right) = {e}^{- j ⁢ \frac{4 ⁢ π}{λ} ⁢ {{r}^{˜}}_{i} ⁢ sin \left({θ}_{hi}^{0}-{ψ}_{n}\right)} ⋅ {e}^{j ⁢ 2 ⁢ π ⁢ {f}_{0} ⁢ {t}_{n}} ⋅ {e}^{j ⁢ 2 ⁢ π ⁢ \left(f-{f}_{0}\right) ⁢ Δ ⁢ {t}_{n}} ⋅ \\ ⋅ {T}_{n} ⁢ sinc ⁢ \left[π⁢\left(f-{f}_{0}\right)⁢{T}_{n}\right]\end{matrix}$

Therefore the coherent combination (in image domain) can be written as $\begin{matrix}I \left(f\right) = {\sum }_{n = 1}^{{N}_{Eq}} {H}_{n} \left(f\right) ⋅ {e}^{j ⁢ 2 ⁢ πf ⁢ {t}_{n}} = {e}^{- j ⁢ \frac{4 ⁢ π}{λ} ⁢ {{r}^{˜}}_{i} ⁢ sin \left({θ}_{{h}_{i}}^{0}-{ψ}_{0}\right)} . \\ ⋅ {\sum }_{n = 1}^{{N}_{Eq}} {e}^{- j ⁢ 2 ⁢ π ⁢ \left(f-{f}_{0}\right) ⁢ \left({t}_{n}-Δ⁢{t}_{n}\right)} ⋅ {T}_{n} ⁢ sinc ⁢ \left[π⁢\left(f-{f}_{0}\right)⁢{T}_{n}\right]\end{matrix}$

After some manipulations an equivalent expression for the equation (16) is obtained, that is $\begin{matrix}I \left(f\right) = {e}^{- j ⁢ \frac{4 ⁢ π}{λ} ⁢ {{r}^{˜}}_{i} ⁢ sin \left({θ}_{{h}_{i}}^{0}-{ψ}_{0}\right)} . \\ ⋅ \left(T+\frac{{ψ}_{1} - {ψ}_{{N}_{EQ}}}{{ω}_{h}}\right) ⁢ sinc ⁢ \left[π⁢\left(f-{f}_{0}\right)⁢\left(T+\frac{{ψ}_{1} - {ψ}_{{N}_{EQ}}}{{ω}_{h}}\right)\right]\end{matrix}$
where the cross-range resolution is $Δ ⁢ {cr}^{\left({N}_{Eq}\right)} = \frac{λ}{2 ⁢ {ω}_{h} ⁢ {T}_{TOT}} = \frac{λ}{2 ⁢ \left({ω}_{h}⁢T+{ψ}_{1}-{ψ}_{{N}_{EQ}}\right)}$
as previously obtained in the equation (5), where *T_{TOT}* is defined as ${T}_{TOT} = T + \frac{{ψ}_{1} - {ψ}_{{N}_{EQ}}}{{ω}_{h}}$

It has to be again noticed that the translational motion between the phase center of each antenna and the fulcrum of the target is assumed to be properly compensated while performing the multi-channel focusing technique. In particular, an additional Translational Motion Compensation step can be performed in proper positions of the previously described data processing chain of the multi-channel focusing technique.

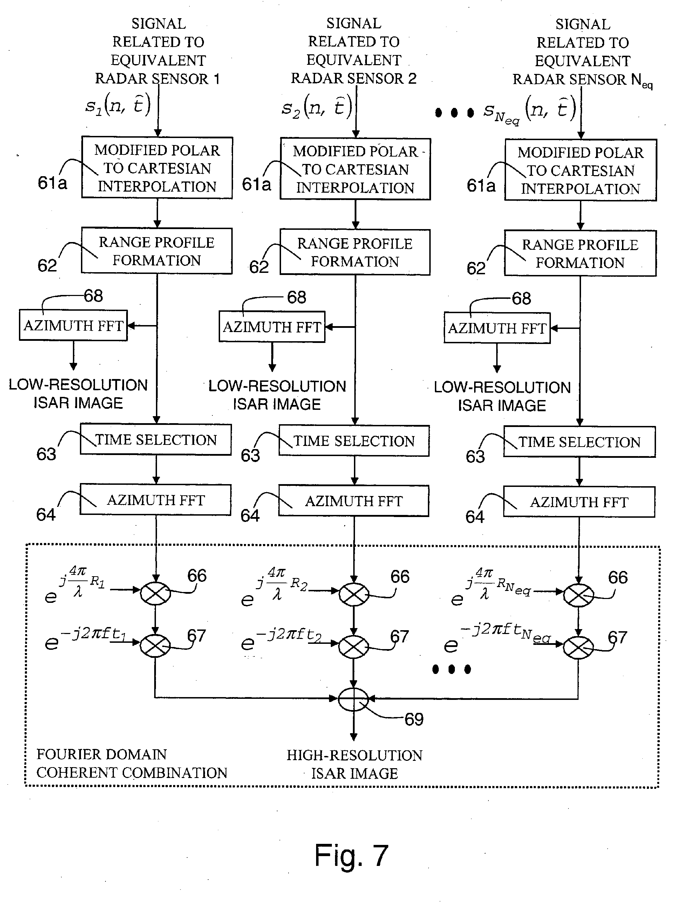

Moreover, as highlighted in the description of the Rotation and Scaling step (block 65), in order to align the different observations to the same IPP, an interpolation stage occurs after focusing the single-equivalent-sensor-based low-resolution ISAR images to correctly rotate these images to set the same Image Projection Plane (IPP). Since an interpolation step (block 61) is already needed to remap the data from a polar to a rectangular grid, in order to not introduce other sources of computational burden, it is possible to exploit the Polar to Cartesian Interpolation (block 61) to perform also the image rotation. This gives rise to an alternative multi-cannel focusing technique shown schematically in figure 7 where the block 65 of figure 6 representing the Rotation and Scaling step has been removed because the Rotation and Scaling processing is embedded in a Modified Polar to Cartesian Interpolation represented by a block 61a. Other processing steps showed in figure 7 are the same ones as those previously described and showed in figure 6. Accordingly, reference numbers used in figure 7 to identify the processing steps are the same ones as those used in figure 6.

In particular, with regard to the Modified Polar to Cartesian Interpolation step (block 61a), it is important to appropriately define the input and output axes for the interpolation.

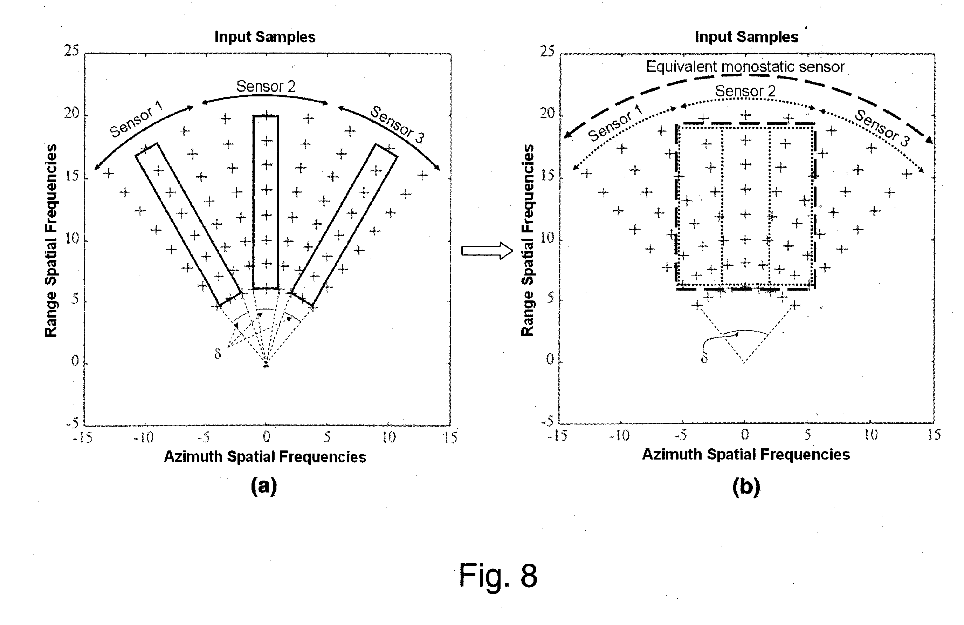

Relating to this, figure 8 shows schematically how the output rectangular (or Cartesian) grid definition changes between the Polar to Cartesian Interpolation step (block 61 of figure 6) and the Modified Polar to Cartesian Interpolation step (block 61a of figure 7).

In detail, in the Polar to Cartesian Interpolation step (block 61 of figure 6) different input polar grids take into account different angular displacements of the data with respect to the different observation angles of the equivalent radar sensors, as shown in figure 8(a), while in the Modified Polar to Cartesian Interpolation step (block 61a of figure 7) a single input polar grid takes into account a global angular displacement of the data with respect to a global observation angle of the distributed equivalent observation, as shown in figure 8(b).

Moreover, in the Polar to Cartesian Interpolation step (block 61 of figure 6) the output rectangular grids, represented in figure 8(a) by solid-line rectangles, are defined separately for all the low-resolution images, while in the Modified Polar to Cartesian Interpolation step (block 61a of figure 7) the output rectangular grids are defined for the images pertaining to all equivalent radar sensors such that the alignment of all the output grids, represented in figure 8(b) by dotted-line rectangles, corresponds to the case of a monostatic observation whose angular aperture is equal to the distributed equivalent aperture, represented in figure 8(b) by a dashed-line rectangle.

Furthermore, in the Modified Polar to Cartesian Interpolation step (block 61a of figure 7) the samples of each observation corresponding to an equivalent radar sensor are displaced consecutively at the intersections between the radials and the circumferences pertaining to the equivalent monostatic observation, and therefore they are equally spaced in the angular and in the radial dimension

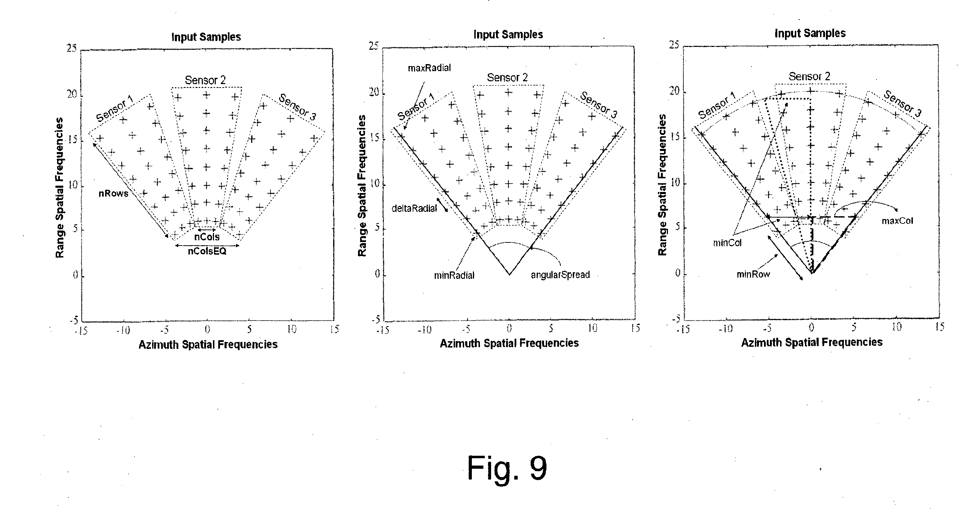

Relating to this, figure 9 shows schematically a definition of the input and output axes for the Modified Polar to Cartesian Interpolation step (block 61a of figure 7) .

In particular, in figure 9 *nRows, nCols* and *nColsEQ* are defined, respectively, as the number of rows, the number of columns for single image and the total number of columns for the equivalent distributed observation.

In the following some relations are introduced to define the axes for the two different 1D interpolating filters to work. In particular, considering one of the radii of the circumference, it is possible to define the minimum and the maximum radial values as follows: $\begin{matrix}minRadial = \frac{4 ⁢ π}{c} ⋅ \left({f}_{c}-\frac{{F}_{s}}{2}\right) ⋅ cos \left({χ}_{n}\right) \\ maxRadial = \frac{4 ⁢ π}{c} ⋅ \left({f}_{c}+\frac{{F}_{s}}{2}\right) ⋅ cos \left({χ}_{n}\right)\end{matrix}$
where *Fₛ* is the sampling frequency, *f_{c}* is the carrier frequency and c is the speed of light. In expressions (20) the frequency axis for the sampled version of the received signal is assumed to be defined in the interval [*f_{c}-Fₛ*/*2*, *f_{c}*+*Fₛ*/*2*], but it is possible to appropriately limit it in the range of frequencies that really define the bandwidth of the received signal after a bandpass filtering. Moreover, a scaling factor *cos*(*χₙ*) is considered, recalling that *χₙ* is defined as the half-difference of the grazing angles pertaining to the TX/RX couple that defines the n-th equivalent observation and, in case of a monostatic observation, this angle is null and the scaling factor equals the unity. The distance of two consecutive samples in each radius can be defined as $deltaRadial = \frac{maxRadial - minRadial}{nRows - 1}$
while the angle due to the whole distributed observation, depending on the equivalent total integration time and the rotation rate *ψₕ* (defined as the first derivative of the effective rotation vector modulus |*ψ̅_{E}*|) is $angularSpread = \frac{{ω}_{h} ⋅ nColsEQ}{PRF}$
Using the expressions in equations (20) and (22) it's possible to define the minimum and the maximum values of the generic row and column of the final global grid, as geometrically explained in figure 9. The difference from the Polar to Cartesian Interpolation step (block 61 of figure 6) stays in the fact that the output grid limits are independent of the observation characteristic (monostatic or bistatic), and therefore equal for all the considered equivalent radar sensors. This implies that the scaling factor *cos*(*χₙ*) must be removed in the definition of the output axis: $\begin{matrix}minRow = minRadial / cos \left({χ}_{n}\right) \\ minCol = minRadial * tan \left(angularSpread/2\right) \\ maxRow = \sqrt{{\left(maxRadial/cos\left({χ}_{n}\right)\right)}^{2} - {minCol}^{2}} \\ maxCol = - minCol\end{matrix}$

Furthermore, the multi-sensor-based ISAR imaging system according to the present invention comprises processing means configured to implement the multi-channel focusing technique on the basis of the radar signals received by the *S* radar sensors.

Conveniently, the processing means can comprise a single imaging processor coupled to the *S* radar sensors to acquire the received radar signals therefrom and configured to process the acquired signals according to the multi-channel focusing technique so as to form high-resolution ISAR images and, preferably, also single-equivalent-sensor-based low-resolution ISAR images.

Alternatively, the processing means can comprise, for each radar sensor, a respective embedded processor embedded therein and configured to perform the Fast-Time Compression (block 51) and, conveniently, also one or more of the processing steps of the single-equivalent-sensor-based processing procedure. Accordingly, one of the embedded processors or a further processor can be coupled to the (other) embedded processors to acquire data therefrom and can be configured to perform, on the basis of the acquired signals, any processing step of the single-equivalent-sensor-based processing procedure not performed by the (other) embedded processors and the combination step (adder 69).

In the following some example results will be presented, which have been obtained by applying the previously-described multi-channel focusing technique to image a side view of a ship target exploiting data collected by a multi-grazing system of flying platforms according to the present invention.

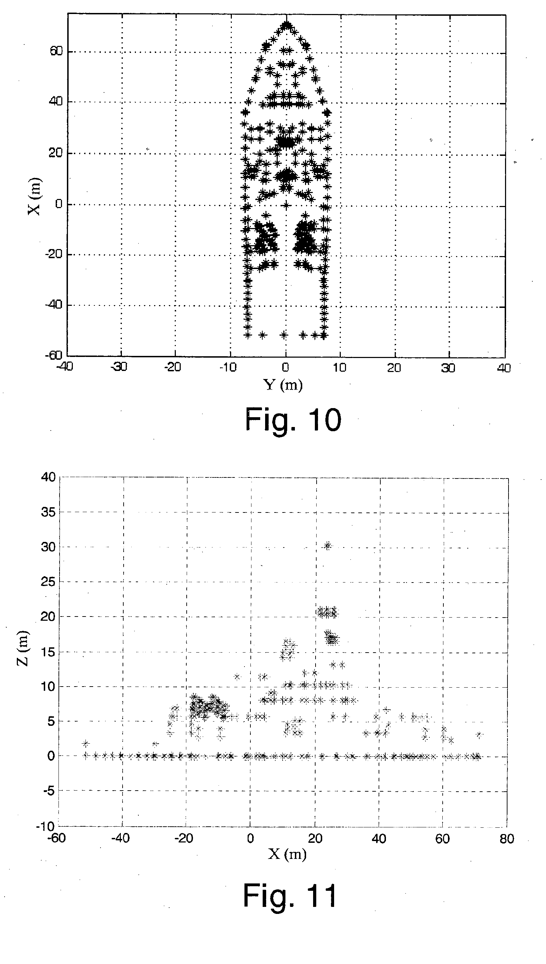

In particular, figures 10 and 11 show, respectively, a plan-view schematic representation and a side view schematic representation of a ship target. The motion of the ship is characterized as follows: $\begin{matrix}{ϑ}_{p} \left(t\right) = {A}_{p} ⋅ sin \left(2⁢π⁢{f}_{p}⋅\left(t-{t}_{0}\right)\right) \\ {ϑ}_{r} \left(t\right) = {A}_{r} ⋅ sin \left(2⁢π⁢{f}_{r}⋅\left(t-{t}_{0}\right)\right) \\ {\dot{ϑ}}_{p} \left(0\right) = {A}_{r} ⋅ 2 ⁢ π ⁢ {f}_{p} \\ {\dot{ϑ}}_{r} \left(0\right) = {A}_{r} ⋅ 2 ⁢ π ⁢ {f}_{r}\end{matrix}$

The motion parameters for the simulations are shown in the following table I:

**TABLE I**

| | |
|---|---|
| Yaw Constant Angular Velocity *ω* | *0 deg*/*s* |
| Yaw Angle Amplitude | *0 deg* |
| Yaw Angle Frequency | *0 Hz* |
| Pitch Angle Amplitude | *1 deg* |
| Pitch Angle Frequency | *0.178 Hz* |
| Roll Angle Amplitude | *5 deg* |
| Roll Angle Frequency | *0.091 Hz* |

As it is apparent from the table I, the target, i.e., the ship, is undergoing only a horizontal motion, being the rotation around the height-related axis Z set to zero, to properly image only the side-view component. The used parameters are typical of medium sea state and, to show the effectiveness of the present invention, the CPI is set to *0.16 s* thus resulting in a cross-range resolution nearly equal to *4.8 m.* The slant range resolution is set to *0.5 m* having set the bandwidth to *300 MHz.*

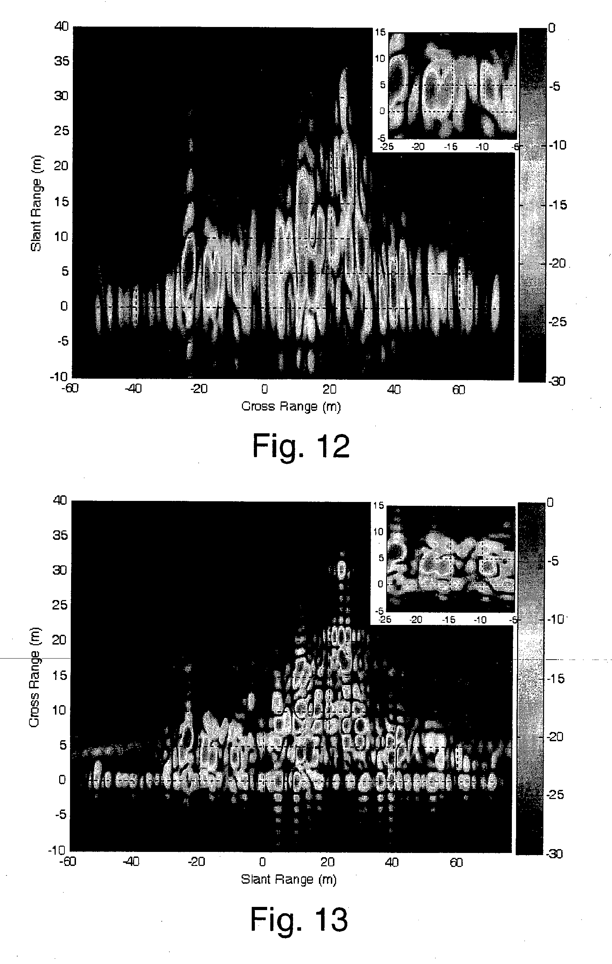

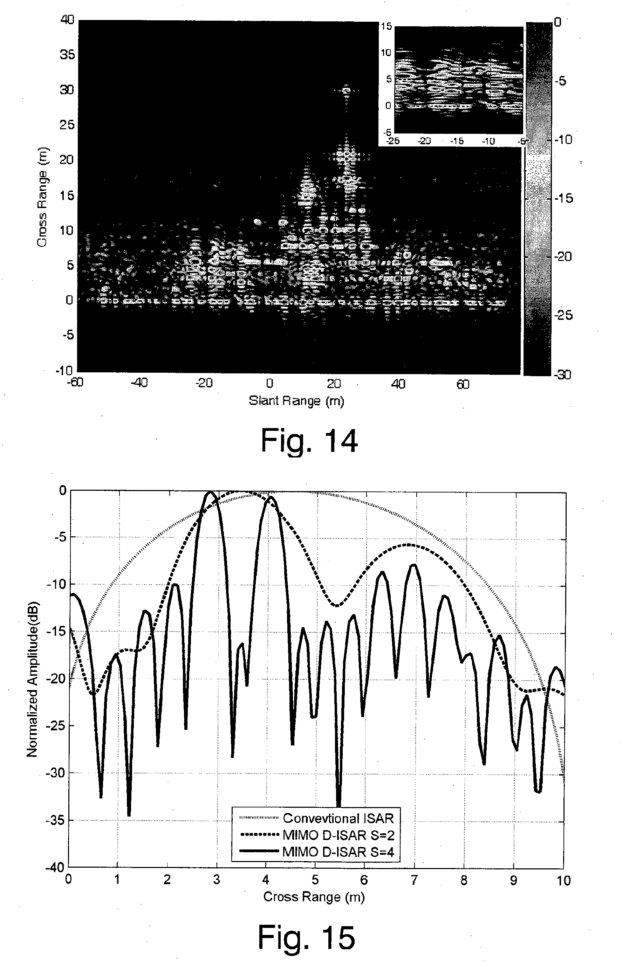

Moreover, figure 12 shows an ISAR side-view image of the ship obtained via simulations with a conventional single-sensor-based ISAR technique, while figures 13 and 14 show two ISAR side-view images of the ship obtained via simulations with the MIMO, multi-grazing ISAR imaging method according to the present invention.

In particular, the ISAR side-view image showed in figure 13 has been obtained exploiting *S*=*2* flying platforms, while the ISAR side-view image showed in figure 14 has been obtained exploiting *S*=*4* flying platforms.

Furthermore, figure 15 shows a comparison among cross-range cuts of the conventional single-sensor-based ISAR technique and of the MIMO, multi-grazing ISAR imaging method according to the present invention with *S*=*2* and *S*=*4*.

In detail, from figure 12 it is possible to see how it is quite impossible to recognize the side of the ship, since there is too much disparity between the resolutions on the two axes, that is the single cell is too rectangular.

On the contrary, the zooms showed in figures 13 and 14 of the respective ISAR side-view images around the point in slant-range/cross-range *(-16, 2.8)* and the cross-range cuts showed in figure 15 at slant-range set nearly equal to *-16 m* show how the improvement in cross-range resolution allows to correctly visualize the side-view of the ship, thus allowing a higher quality ISAR image to be given in input to a potential subsequent stage for classification and/or recognition of the target imaged in the ISAR image.

From the foregoing, it may be immediately appreciated that, unlike conventional single-sensor-based ISAR imaging systems which often provide poor-quality ISAR images due to the small view angle variation through the CPI (this situation occurring, for example, when the target to be imaged is a ship at sea with low sea state conditions, which low sea state conditions are very frequent in several areas of the world, especially in the Mediterranean sea) which poor-quality ISAR images give poor Non Cooperative Target Recognition (NCTR) performance, the present invention allows to obtain good-quality ISAR images by exploiting the signal from multiple sensors carried by multiple airborne/spaceborne platforms.

In particular, as previously described, the present invention teaches to collect, process and combine the signals received by a multi-aspect or multi-grazing ISAR system.

In detail, the processing scheme according to the previously-described preferred embodiment of the present invention comprises a signal composition strategy and a distributed focusing algorithm which allows to obtain single-equivalent-sensor-based ISAR images pertaining to the single equivalent radar sensors together with a distributed ISAR (D-ISAR) image.

Relating to this, it's important to underline again the fact that the previously-described multi-channel focusing technique is advantageously exploitable by both a multi-grazing ISAR imaging system and a multi-aspect ISAR imaging system.

Furthermore, the multi-sensor ISAR system according to the present invention has several applications related to surveillance aiming at facing illegal activities of different kind, and terroristic threats. In fact, as previously described, the use of the multi-grazing ISAR imaging method allows to overcome the problems arising in the formation of ISAR side-view images when the motion of the targets is not sufficient to reach the proper angle variation (for example because the target is a ship at sea with low sea state conditions). Since side-view images are of particular interest for maritime targets in order to recognize them, the present invention allows to support NCTR also in case of maritime targets at sea with low sea state conditions. Therefore, the present invention can be advantageously exploited for missions related to contraband control and in general to all illicit activities occurring at sea, such as clandestine immigration, drug trafficking, smuggling, arms and toxic waste trafficking.

Finally, it is clear that numerous modifications and variants can be made to the present invention, all falling within the scope of the invention, as defined in the appended claims.

## Claims

1. Inverse Synthetic Aperture Radar imaging method comprising:
• observing a target (25) undergoing pitch and/or roll motions by means of S radar sensors each carried by a respective airborne/spaceborne platform (21, 22, 23, 24), S being an integer higher than one; wherein each of the S radar sensors observes the target (25) with a respective grazing angle (*ψᵢ*) defined on the basis of a respective elevation distance (*Zᵢ*) between a fulcrum of the observed target (25) and a phase centre of the radar sensor, and of a respective slant range distance (*Rᵢ*) between the fulcrum of the observed target (25) and the phase centre of the radar sensor; and wherein the target (25) is observed by
- illuminating said target (25) with radar signals transmitted by *P* transmitting and receiving radar sensor(s) among the S radar sensors, P being an integer equal to or higher than one, and lower than or equal to *S,* and
- receiving by means of the S radar sensors the radar signals back-scattered by the illuminated target (25); and
• forming an Inverse Synthetic Aperture Radar side-view image of the observed target (25) on the basis of the received radar signals;
wherein each of the P transmitting and receiving radar sensor(s) transmits a corresponding radar waveform among P separable radar waveforms;
**characterized in that**:
• the S radar sensors observe the target (25) with different grazing angles thereby resulting in a multi-grazing arrangement of said S radar sensors with respect to the observed target (25); and
• forming an Inverse Synthetic Aperture Radar side-view image of the observed target (25) comprises applying to the radar signals received by the S radar sensors a decentralized multi-channel focusing technique;
wherein applying to the radar signals received by the S radar sensors a decentralized multi-channel focusing technique comprises:
• performing, for each of the P transmitting and receiving radar sensor(s), a Fast-Time Compression (51) of the radar signals received by said transmitting and receiving radar sensor so as to extract therefrom a signal related to the radar waveform transmitted by said transmitting and receiving radar sensor; and
• performing, for each of the *S-P* receiving-only radar sensor(s), a Fast-Time Compression (51) of the radar signals received by said receiving-only radar sensor so as to extract therefrom a signal related to the radar waveform transmitted by a corresponding transmitting and receiving radar sensor;
wherein each extracted signal is related to a corresponding equivalent radar sensor defined by the radar sensor that has received the radar signals which the extracted signal has been extracted from, and by the transmitting and receiving radar sensor that has transmitted the radar waveform which said extracted signal is related to;
wherein applying to the radar signals received by the S radar sensors a decentralized multi-channel focusing technique further comprises:
• converting (61; 61a), for each equivalent radar sensor, respective data in polar format related to the extracted signal related to said equivalent radar sensor into respective data in rectangular format;
• transforming (62), for each equivalent radar sensor, the respective data in rectangular format from a range-frequency domain into a range domain; and
• performing, for each equivalent radar sensor, a respective first.Azimuth Fourier Transform (68) of the respective data transformed into the range domain so as to form a corresponding single-equivalent-sensor-based Inverse Synthetic Aperture Radar side-view image of the target (25) as observed by said equivalent radar sensor, said corresponding single-equivalent-sensor-based Inverse Synthetic Aperture Radar side-view image having a single-equivalent-sensor-based cross-range resolution; and
• forming an all-equivalent-sensor-based Inverse Synthetic Aperture Radar side-view image of the target (25) as observed by all the equivalent radar sensors on the basis of data related to all the formed single-equivalent-sensor-based Inverse Synthetic Aperture Radar side-view images, said all-equivalent-sensor-based Inverse Synthetic Aperture Radar side-view image having an all-equivalent-sensor-based cross-range resolution higher than the single-equivalent-sensor-based cross-range resolutions.

2. The method of claim 1, wherein, for each of the *S* radar sensors, the respective elevation distance (*Zᵢ*) is in a height-related reference direction (*Z*) perpendicular to a horizontal plane *(XY)* that is tangent to the Earth's surface and comprises the fulcrum of the observed target (25);
wherein each of the S radar sensors observes the target (25) with a respective aspect angle (*ζᵢ*) defined on the basis of an angle on the horizontal plane (*XY*) between a projection of the respective slant range distance (*Rᵢ*) on said horizontal plane (*XY*) and a longitude-related reference direction (X) lying on said horizontal plane (*XY*);
and wherein the S radar sensors observe the target (25) with one and the same aspect angle.

3. The method according to claim 1 or 2, wherein forming an all-equivalent-sensor-based Inverse Synthetic Aperture Radar side-view image of the target (25) comprises:
• selecting (63), for each equivalent radar sensor, a respective data portion of the respective data transformed into the range domain so as to discard part of said respective data transformed into the range domain when a first observation of the target (25) by said equivalent radar sensor is partially overlapped with a second observation of the target (25) by another equivalent radar sensor;
• performing, for each equivalent radar sensor, a respective second Azimuth Fourier Transform (64) of the respective selected data portion so as to transform the respective selected data portion into an image domain; and
• coherently combining all the selected data portions transformed into the image domain so as to form the all-equivalent-sensor-based Inverse Synthetic Aperture Radar side-view image of the target (25).

4. The method according to any preceding claim, wherein, for each equivalent radar sensor, said polar format and said rectangular format are based on a respective observation angle of said equivalent radar sensor.

5. The method of claim 3, wherein, for each equivalent radar sensor, said polar format and said rectangular format are based on a respective observation angle of said equivalent radar sensor; and wherein coherently combining all the selected data portions transformed into the image domain so as to form the all-equivalent-sensor-based Inverse Synthetic Aperture Radar side-view image of the target (25) comprises:
• for each equivalent radar sensor applying
- to the respective selected data portion transformed into the image domain a respective rotation (65) so as to set one and the same Image Projection Plane (IPP) for all the equivalent radar sensors,
- to the respective selected data portion transformed into the image domain and to which the respective rotation (65) has been applied a respective phase alignment (66) based on a respective first phase term related to a respective distance between said equivalent radar sensor and the target (25) so as to obtain respective phase-aligned data, and
- to the respective phase-aligned data a respective time alignment (67) based on a respective second phase term related to a respective given time shift so as to obtain respective time-aligned data; and
• combining (69) all the time-aligned data so as to form the all-equivalent-sensor-based Inverse Synthetic Aperture Radar side-view image of the target (25).

6. The method according to any claim 1-3, wherein, for each equivalent radar sensor, said polar format and said rectangular format are based on a global observation angle of all the equivalent radar sensors.

7. The method of claim 3, wherein, for each equivalent radar sensor, said polar format and said rectangular format are based on a global observation angle of all the equivalent radar sensors; and wherein coherently combining all the selected data portions transformed into the image domain so as to form the all-equivalent-sensor-based Inverse Synthetic Aperture Radar side-view image of the target (25) comprises:
• for each equivalent radar sensor applying
- to the respective selected data portion transformed into the image domain a respective phase alignment (66) based on a respective first phase term related to a respective distance between said equivalent radar sensor and the target (25) so as to obtain respective phase-aligned data, and
- to the respective phase-aligned data a respective time alignment (67) based on a respective second phase term related to a respective given time shift so as to obtain respective time-aligned data; and
• combining (69) all the time-aligned data so as to form the all-equivalent-sensor-based Inverse Synthetic Aperture Radar side-view image of the target (25).

8. Inverse Synthetic Aperture Radar imaging system comprising S radar sensors each designed to be carried by a respective airborne/spaceborne platform (21, 22, 23, 24), S being an integer higher than one;
wherein said Inverse Synthetic Aperture Radar imaging system is configured to implement the Inverse Synthetic Aperture Radar imaging method claimed in any preceding claim, and comprises processing means configured to apply to radar signals received by the *S* radar sensors the decentralized multi-channel focusing technique of the Inverse Synthetic Aperture Radar imaging method claimed in any preceding claim.

9. Processing means for an Inverse Synthetic Aperture Radar imaging system, said processing means being configured to implement the decentralized multi-channel focusing technique of the Inverse Synthetic Aperture Radar imaging method claimed in any preceding claim.

10. Software program loadable into memory means of processing means for an Inverse Synthetic Aperture Radar imaging system, and comprising software code portions configured to implement the decentralized multi-channel focusing technique of the Inverse Synthetic Aperture Radar imaging method claimed in any preceding claim.

## Patentansprüche

1. Ein Bildgebendes Verfahren mittels eines Radars mit inverser synthetischer Apertur, wobei das Verfahren die folgenden Schritte aufweist:
Beobachten eines Ziels (25) das Abnick- bzw. Pitch und /oder Rollbewegungen unterliegt, mittels S Radarsensoren, wobei jeder durch eine entsprechende luftgestützte/weltraumgestützte Plattform (21, 22, 23, 24) getragen wird, wobei S eine Ganzzahl darstellt, die größer ist als eins; wobei jeder der S Radarsensoren das Ziel (25) unter einem entsprechenden Streifwinkel (Ψᵢ) beobachtet, der auf der Basis eines entsprechenden Elevationsabstands (Zᵢ), zwischen einem Drehpunkt des beobachteten Ziels (25) und einem Phasenzentrum des Radarsensors, und auf einer entsprechenden Radialentfernung bzw. slant range (Rᵢ), zwischen dem Drehpunkt des beobachteten Ziels (25) und dem Phasenzentrum des Radarsensors, definiert ist, und wobei das Ziel (25) beobachtet wird durch:
- Beleuchten des Ziels (25) mit Radarsignalen, durch P sendende und empfangende Radarsensoren aus den S Radarsensoren, wobei P eine Ganzzahl darstellt, die größer oder gleich eins ist, und kleiner oder gleich S ist, und
- Empfangen der durch das beleuchtete Ziel (25) zurück gestreuten Radarsignale mittels der S Radarsensoren; und
• Ausbilden eines Seitenansichtbildes mittels des Radars mit inverser synthetischer Apertur des beobachteten Ziels (25) auf der Basis der empfangenen Radarsignale;
wobei jeder der P sendenden und empfangenden Radarsensoren eine entsprechende Radarwellenform aus den P separierbaren Radarwellenformen aussendet;
**dadurch gekennzeichnet, dass**:
• die S Radarsensoren das Ziel (25) unter unterschiedlichen Streifwinkeln beobachten, was in einer mehrfach Streifwinkel Anordnung der S Radarsensoren, bezüglich des beobachteten Ziels (25), resultiert; und
• wobei das Ausbilden eines Seitenansichtbildes mittels des Radars mit inverser synthetischer Apertur des beobachteten Ziels (25) ferner das Anwenden einer dezentralisierten Mehrkanal Fokusiertechnik auf die Radarsignale aufweist, die durch die S Radarsensoren empfangen wurden;
wobei das Anwenden einer dezentralisierten Mehrkanal Fokusiertechnik auf die Radarsignale, die durch die S Radarsensoren empfangen wurden, ferner folgende Schritte aufweist:
• Ausführen, für jeden der P sendenden und empfangenden Radarsensoren, einer Fast-Time Kompression (51) der Radarsignale, die durch den sendenden und empfangenden Radarsensor empfangen wurden, um davon ein Signal zu extrahieren, das mit der Radarwellenform, die durch den sendenden und empfangenden Radarsensor gesendet wurde, in Beziehung steht; und
• Ausführen, für jeden der S-P nur empfangenden Radarsensoren, einer Fast-Time Kompression (51) der Radarsignale, die durch den nur empfangenden Radarsensor empfangen wurden, um davon ein Signal zu extrahieren, das mit der Radarwellenform, die durch einen entsprechenden sendenden und empfangenden Radarsensor gesendet wurde, in Beziehung steht;
wobei jedes extrahierte Signal mit einem entsprechenden äquivalenten Radarsensor in Beziehung steht, der durch den Radarsensor definiert ist, der die Radarsignale empfangen hat, von denen die extrahierten Signale extrahiert wurden, und durch den sendenden und empfangenden Radarsensor, der die Radarwellenform gesendet hat, mit dem das extrahierte Signal in Beziehung steht;
wobei das Anwenden einer dezentralisierten Mehrkanal Fokusiertechnik auf die Radarsignale, die durch die S Radarsensoren empfangen wurden, ferner folgende Schritte aufweist:
• Konvertieren (61; 61 a), für jeden äquivalenten Radarsensor, entsprechender Daten in Polarformat, die mit dem extrahierten Signal in Beziehung stehen, die mit dem äquivalenten Radarsensor in Beziehung stehen, in entsprechende Daten in rechtwinkligem Format;
• Transformieren (62), für jeden äquivalenten Radarsensor, der entsprechenden Daten in rechtwinkligem Format von einer Entfernungs-Frequenz Domäne in eine Entfernungsdomäne; und
• Ausführen, für jeden äquivalenten Radarsensor, einer entsprechenden ersten Azimuth Fouriertransformation (68) der entsprechenden Daten, die in die Entfernungsdomäne transformiert wurden, um ein entsprechendes Einzel-Äquivalenz-Sensor-basiertes Seitenansichtbild des Ziels (25), wie mit dem äquivalenten Radarsensor beobachtet, mittels des Radars mit inverser synthetischer Apertur auszubilden, wobei das entsprechende Einzel-Äquivalenz-Sensor-basierte Seitenansichtbild mittels des Radars mit inverser synthetischer Apertur eine Einzel-Äquivalenz-Sensor-basierte Querentfernungsauflösung aufweist; und
• Ausbilden eines Gesamt-Äquivalenz-Sensor-basierten Seitenansichtbildes des Ziels (25), wie mit allen äquivalenten Radarsensoren beobachtet, mittels des Radars mit inverser synthetischer Apertur, auf der Basis der Daten, die mit allen der ausgebildeten Einzel-Äquivalenz-Sensor-basierten Seitenansichtbilder mittels des Radars mit inverser synthetischer Apertur in Beziehung stehen, wobei das Gesamt-Äquivalenz-Sensor-basierte Seitenansichtbild mittels des Radars mit inverser synthetischer Apertur eine Gesamt-Äquivalenz-Sensor-basierte Querentfernungsauflösung aufweist, die größer ist als die Einzel-Äquivalenz-Sensor-basierten Querentfernungsauflösungen.

2. Das Verfahren nach Anspruch 1, wobei für jeden der S Radarsensoren, die entsprechende Elevationsentfernung (*Zᵢ*) in einer stark abhängigen Referenzrichtung (Z), senkrecht zu einer horizontalen Ebene (XY), liegt, die tangential zu der Erdoberfläche ist und den Drehpunkt des beobachteten Ziels (25) beinhaltet;
wobei jeder der S Radarsensoren das Ziel (25) unter einem entsprechenden Aspektwinkel (ξᵢ) beobachtet, der definiert ist auf der Basis eines Winkels auf der horizontalen Ebene (XY) zwischen einer Projektion der entsprechenden Radialentfernung (Rᵢ) auf der horizontalen Ebene (XY) und einer Längengrad bezüglichen Referenzrichtung (X), die in der horizontalen Ebene (XY) liegt;
und wobei die S Radarsensoren das Ziel (25) unter ein und demselben Aspektwinkel beobachten.

3. Das Verfahren nach Anspruch 1 oder 2, wobei das Ausbilden eines Gesamt-Äquivalenz-Sensor-basierten Seitenansichtbildes des Ziels (25), mittels des Radars mit inverser synthetischer Apertur ferner folgende Schritte aufweist:
• Auswählen (63), für jeden äquivalenten Radarsensor, eines entsprechenden Datenteils der entsprechenden Daten, die in die Entfernungsdomäne transformiert wurden, um einen Teil der entsprechenden Daten, die in die Entfernungsdomäne transformiert wurden, zu verwerfen, wenn sich eine erste Beobachtung des Ziels (25) durch einen äquivalenten Radarsensor mit einer zweiten Beobachtung des Ziels (25) durch einen weiteren äquivalenten Radarsensor teilweise überlappt;
• Ausführen, für jeden äquivalenten Radarsensor, einer entsprechenden zweiten Azimuth Fouriertransformation (64) des entsprechenden ausgewählten Datenteils, um den entsprechenden ausgewählten Datenteil in eine Bilddomäne zu transformieren; und
• kohärentes Kombinieren aller ausgewählter Datenteile, die in die Bilddomäne transformiert wurden, um das Gesamt-Äquivalenz-Sensor-basierte Seitenansichtbildes des Ziels (25) mittels des Radars mit inverser synthetischer Apertur auszubilden.

4. Das Verfahren nach einem der vorhergehenden Ansprüche, wobei für jeden äquivalenten Radarsensor das Polarformat und das rechtwinklige Format auf einem entsprechenden Beobachtungswinkel des äquivalenten Radarsensors basieren.

5. Das Verfahren nach Anspruch 3, wobei für jeden äquivalenten Radarsensor das Polarformat und das rechtwinklige Format auf einem entsprechenden Beobachtungswinkel des äquivalenten Radarsensors basieren; und wobei das kohärente Kombinieren aller ausgewählter Datenteile, die in die Bilddomäne transformiert wurden, um das Gesamt-Äquivalenz-Sensor-basierte Seitenansichtbild des Ziels (25) mittels des Radars mit inverser synthetischer Apertur auszubilden, ferner folgende Schritte aufweist:
• für jeden äquivalenten Radarsensor, Anwenden
- auf den entsprechenden ausgewählten Datenteil, der in die Bilddomäne transformiert wurde, einer entsprechenden Drehung (65), um ein und dieselbe Bildprojektionsebene (IPP = Image Projection Plane) für alle äquivalente Radarsensoren festzulegen,
- auf den entsprechenden ausgewählten Datenteil, der in die Bilddomäne transformiert wurde und auf den die entsprechende Drehung (65) angewendet wurde, einer entsprechenden Phasenanpassung (66), basierend auf einem entsprechenden ersten Phasenterm, der mit einer entsprechenden Entfernung zwischen dem äquivalenten Radarsensor und dem Ziel (25) in Beziehung steht, um entsprechende Phasen angepasste Daten zu erhalten, und
- auf die entsprechenden Phasen angepassten Daten, einer entsprechenden Zeitanpassung (67), basierend auf einem entsprechenden zweiten Phasenterm, der mit einer entsprechenden gegebenen Zeitverschiebung in Beziehung steht, um entsprechende zeitangepasste Daten zu erhalten; und
• Kombinieren (69) aller zeitangepasster Daten, um das Gesamt-Äquivalenz-Sensor-basierte Seitenansichtbild des Ziels (25) mittels des Radars mit inverser synthetischer Apertur auszubilden.

6. Das Verfahren nach einem der Ansprüche 1 bis 3, wobei für jeden äquivalenten Radarsensor das Polarformat und das rechtwinklige Format auf einem globalen Beobachtungswinkel aller äquivalenten Radarsensoren basiert.

7. Das Verfahren nach Anspruch 3, wobei für jeden äquivalenten Radarsensor das Polarformat und das rechtwinklige Format auf einem globalen Beobachtungswinkel aller äquivalenten Radarsensoren basiert; und wobei das kohärente Kombinieren aller ausgewählter Datenteile, die in die Bilddomäne transformiert wurden, um das Gesamt-Äquivalenz-Sensor-basierte Seitenansichtbild des Ziels (25) mittels des Radars mit inverser synthetischer Apertur auszubilden, ferner folgende Schritte aufweist:
• für jeden äquivalenten Radarsensor, Anwenden
- auf den entsprechenden ausgewählten Datenteil, der in die Bilddomäne transformiert wurde, einer entsprechenden Phasenanpassung (66), basierend auf einem entsprechenden ersten Phasenterm, der mit einer entsprechenden Entfernung zwischen dem äquivalenten Radarsensor und dem Ziel (25) verknüpft ist, um entsprechende Phasen angepasste Daten zu erhalten, und
- auf die entsprechenden Phasen angepassten Daten, einer entsprechenden Zeitanpassung (67), basierend auf einem entsprechenden zweiten Phasenterm, der mit einer entsprechenden gegebenen Zeitverschiebung in Beziehung steht, um entsprechende zeitangepasste Daten zu erhalten; und
• Kombinieren (69) aller zeitangepasster Daten, um das Gesamt-Äquivalenz-Sensor-basierte Seitenansichtbild des Ziels (25) mittels des Radars mit inverser synthetischer Apertur auszubilden.

8. Ein Bildgebendes System mittels Radar mit inverser synthetischer Apertur, wobei das Bildgebende System S Radarsensoren aufweist, wobei jeder derart ausgestaltet ist durch eine entsprechende luftgestützte/weltraumgestützte Plattform (21, 22, 23, 24) getragen zu werden, wobei S eine Ganzzahl größer ein ist, wobei das Bildgebende System mittels Radar mit inverser synthetischer Apertur konfiguriert ist das Bildgebende Verfahren mittels eines Radars mit inverser synthetischer Apertur nach einem der vorhergehenden Ansprüche zu implementieren und ferner Verarbeitungsmittel aufweist, die geeignet sind auf Radarsignale, die durch die S Radarsensoren empfangen wurden, die dezentralisierte Mehrkanal Fokusiertechnik des Bildgebenden Verfahrens mittels eines Radars mit inverser synthetischer Apertur nach einem der vorhergehenden Ansprüche, anzuwenden.

9. Verarbeitungsmittel für ein Bildgebendes System mittels Radar mit inverser synthetischer Apertur, wobei die Verarbeitungsmittel konfiguriert sind die dezentralisierte Mehrkanal Fokusiertechnik des Bildgebenden Verfahrens mittels eines Radars mit inverser synthetischer Apertur nach einem der vorhergehenden Ansprüche, zu implementieren.

10. Ein Software-Programm, das geeignet ist in ein Speichermittel eines Verarbeitungsmittels für ein Bildgebendes System mittels Radar mit inverser synthetischer Apertur geladen zu werden, und Softwarecodeteile aufweist, die konfiguriert sind die dezentralisierte Mehrkanal Fokusiertechnik des Bildgebenden Verfahrens mittels eines Radars mit inverser synthetischer Apertur nach einem der vorhergehenden Ansprüche, zu implementieren.

## Revendications

1. Procédé d'imagerie à radar à synthèse d'ouverture inverse comprenant :
. l'observation d'une cible (25) subissant des mouvements de tangage et/ou de roulis au moyen de S capteurs radar supportés chacun par une plateforme aérienne/spatiale (21, 22, 23, 24) respective, S étant un entier supérieur à un ; dans lequel chacun des S capteurs radar observe la cible (25) avec un angle d'incidence (Ψᵢ) respectif défini sur la base d'une distance d'élévation (Zᵢ) respective entre un pivot de la cible (25) observée et un centre de phase du capteur radar, et d'une distance oblique (Rᵢ) respective entre le pivot de la cible (25) observée et le centre de phase du capteur radar ; et dans lequel la cible (25) est observée en
- éclairant ladite cible (25) avec les signaux radar transmis par P capteurs radar d'émission et de réception parmi les S capteurs radar, P étant un entier supérieur ou égal à un et inférieur ou égal à S, et
- recevant, au moyen des S capteurs radar, les signaux radar rétro-diffusés par la cible (25) éclairée ; et
. la formation d'une image de vue latérale de radar à synthèse d'ouverture inverse de la cible (25) observée sur la base des signaux radar reçus ;
dans lequel chacun des P capteurs radar d'émission et de réception émet une forme d'onde radar correspondante parmi P formes d'onde radar séparables ;
**caractérisé en ce que** :
. les S capteurs radar observent la cible (25) avec différents angles d'incidence, résultant de ce fait en un agencement multi-incidence desdits S capteurs radar par rapport à la cible (25) observée ; et
. la formation d'une image de vue latérale de radar à synthèse d'ouverture inverse de la cible (25) observée comprend l'application, aux signaux radar reçus par les S capteurs radar, d'une technique de mise au point multicanal décentralisée ;
dans lequel l'application aux signaux radar reçus par les S capteurs radar d'une technique de mise au point multicanal décentralisée comprend :
. l'exécution, pour chacun des P capteurs radar d'émission et de réception, d'une compression rapide (51) des signaux radar reçus par ledit capteur radar d'émission et de réception de manière à extraire de ceux-ci un signal associé à la forme d'onde radar émise par ledit capteur radar d'émission et de réception ; et
. l'exécution, pour chacun des S-P capteurs radar de réception uniquement, d'une compression rapide (51) des signaux radar reçus par ledit capteur radar de réception uniquement de manière à extraire de ceux-ci un signal associé à la forme d'onde radar émise par un capteur radar d'émission et de réception correspondant ;
dans lequel chaque signal extrait concerne un capteur radar équivalent correspondant défini par le capteur radar qui a reçu les signaux radar desquels le signal extrait a été extrait, et par le capteur radar d'émission et de réception qui a émis la forme d'onde radar à laquelle ledit signal extrait est associé ;
dans lequel l'application aux signaux radar reçus par les S capteurs radar d'une technique de mise au point multicanal décentralisée comprend en outre :
. la conversion (61 ; 61a), pour chaque capteur radar équivalent, des données respectives au format polaire associées au signal extrait associé au dit capteur radar équivalent en des données respectives au format rectangulaire ;
. la transformation (62), pour chaque capteur radar équivalent, des données respectives au format rectangulaire d'un domaine distance-fréquence vers un domaine de distance ; et
. l'exécution, pour chaque capteur radar équivalent, d'une première transformation de Fourier d'azimut (68) respective des données respectives transformées dans le domaine de distance de manière à former une image de vue latérale de radar à synthèse d'ouverture inverse basée sur un capteur équivalent unique correspondante de la cible (25) telle qu'observée par ledit capteur radar équivalent, ladite image de vue latérale de radar à synthèse d'ouverture inverse basée sur un capteur équivalent unique correspondante ayant une résolution transversale basée sur un capteur équivalent unique ; et
. la formation d'une image de vue latérale de radar à synthèse d'ouverture inverse basée sur tous les capteurs équivalents de la cible (25) telle qu'observée par tous les capteurs radar équivalents sur la base des données associées à toutes les images de vue latérale de radar à synthèse d'ouverture inverse basées sur un capteur équivalent unique formées, ladite image de vue latérale de radar à synthèse d'ouverture inverse basée sur tous les capteurs équivalents ayant une résolution transversale basée sur tous les capteurs équivalents supérieure aux résolutions transversales basées sur un capteur équivalent unique.

2. Procédé selon la revendication 1, dans lequel, pour chacun des S capteurs radar, la distance d'élévation (Zᵢ) respective est dans une direction de référence associée à la hauteur (Z) perpendiculaire à un plan horizontal (XY) qui est tangent à la surface de la terre et qui comprend le pivot de la cible (25) observée ;
dans lequel chacun des S capteurs radar observe la cible (25) avec un angle d'aspect (ζᵢ) respectif défini sur la base d'un angle dans le plan horizontal (XY) entre une projection de la distance oblique (Rᵢ) respective sur ledit plan horizontal (XY) et une direction de référence associée à la longitude (X) se trouvant dans ledit plan horizontal (XY) ;
et dans lequel les S capteurs radar observent la cible (25) avec un seul et même angle d'aspect.

3. Procédé selon la revendication 1 ou 2, dans lequel la formation d'une image de vue latérale de radar à synthèse d'ouverture inverse basée sur tous les capteurs équivalents de la cible (25) comprend :
. la sélection (63), pour chaque capteur radar équivalent, d'une partie de données respective des données respectives transformées dans le domaine de distance de manière à abandonner une partie desdites données respectives transformées dans le domaine de distance lorsqu'une première observation de la cible (25) par ledit capteur radar équivalent est partiellement superposée à une deuxième observation de la cible (25) par un autre capteur radar équivalent ;
. l'exécution, pour chaque capteur radar équivalent, d'une deuxième transformation de Fourier d'azimut (64) respective de la partie de données sélectionnée respective de manière à transformer la partie de données sélectionnée respective dans un domaine d'image ; et
. la combinaison cohérente de toutes les parties de données sélectionnées transformées dans le domaine d'image de manière à former l'image de vue latérale de radar à synthèse d'ouverture inverse basée sur tous les capteurs équivalents de la cible (25).

4. Procédé selon l'une quelconque des revendications précédentes, dans lequel, pour chaque capteur radar équivalent, ledit format polaire et ledit format rectangulaire sont basés sur un angle d'observation respectif dudit capteur radar équivalent.

5. Procédé selon la revendication 3, dans lequel, pour chaque capteur radar équivalent, ledit format polaire et ledit format rectangulaire sont basés sur un angle d'observation respectif dudit capteur radar équivalent ; et dans lequel la combinaison cohérente de toutes les parties de données sélectionnées transformées dans le domaine d'image de manière à former l'image de vue latérale de radar à synthèse d'ouverture inverse basée sur tous les capteurs équivalents de la cible (25) comprend :
. pour chaque capteur radar équivalent, l'application
- à la partie de données sélectionnée respective transformée dans le domaine d'image, d'une rotation (65) respective de manière à définir un seul et même plan de projection d'image (IPP) pour tous les capteurs radar équivalents,
- à la partie de données sélectionnée respective transformée dans le domaine d'image et à laquelle la rotation (65) respective a été appliquée, d'un alignement de phase (66) respectif basé sur un premier terme de phase respectif associé à une distance respective entre ledit capteur radar équivalent et la cible (25) de manière à obtenir des données alignées en phase respectives, et
- aux données alignées en phase respectives, d'un alignement dans le temps (67) respectif basé sur un deuxième terme de phase respectif associé à un décalage dans le temps donné respectif de manière à obtenir des données alignées dans le temps respectives ; et
. la combinaison (69) de toutes les données alignées dans le temps de manière à former l'image de vue latérale de radar à synthèse d'ouverture inverse basée sur tous les capteurs équivalents de la cible (25).

6. Procédé selon l'une quelconque des revendications 1 à 3, dans lequel, pour chaque capteur radar équivalent, ledit format polaire et ledit format rectangulaire sont basés sur un angle d'observation global de tous les capteurs radar équivalents.

7. Procédé selon la revendication 3, dans lequel, pour chaque capteur radar équivalent, ledit format polaire et ledit format rectangulaire sont basés sur un angle d'observation global de tous les capteurs radar équivalents ; et dans lequel la combinaison cohérente de toutes les parties de données sélectionnées transformées dans le domaine d'image de manière à former l'image de vue latérale de radar à synthèse d'ouverture inverse basée sur tous les capteurs équivalents de la cible (25) comprend :
. pour chaque capteur radar équivalent, l'application
- à la partie de données sélectionnée respective transformée dans le domaine d'image, d'un alignement de phase (66) respectif basé sur un premier terme de phase respectif associé à une distance respective entre ledit capteur radar équivalent et la cible (25) de manière à obtenir des données alignées en phase respectives, et
- aux données alignées en phase respectives, d'un alignement dans le temps (67) respectif basé sur un deuxième terme de phase respectif associé à un décalage dans le temps donné respectif de manière à obtenir des données alignées dans le temps respectives ; et
. la combinaison (69) de toutes les données alignées dans le temps de manière à former l'image de vue latérale de radar à synthèse d'ouverture inverse basée sur tous les capteurs équivalents de la cible (25).

8. Système d'imagerie à radar à synthèse d'ouverture inverse comprenant S capteurs radar conçus chacun pour être supporté par une plateforme aérienne/spatiale (21, 22, 23, 24) respective, S étant un entier supérieur à un ;
dans lequel ledit système d'imagerie à radar à synthèse d'ouverture inverse est configuré pour mettre en oeuvre le procédé d'imagerie à radar à synthèse d'ouverture inverse selon l'une quelconque des revendications précédentes, et comprend des moyens de traitement configurés pour appliquer, aux signaux radar reçus par les S capteurs radar, la technique de mise au point multicanal décentralisée du procédé d'imagerie à radar à synthèse d'ouverture inverse selon l'une quelconque des revendications précédentes.

9. Moyens de traitement pour un système d'imagerie à radar à synthèse d'ouverture inverse, lesdits moyens de traitement étant configurés pour mettre en oeuvre la technique de mise au point multicanal décentralisée du procédé d'imagerie à radar à synthèse d'ouverture inverse selon l'une quelconque des revendications précédentes.

10. Programme logiciel pouvant être chargé dans des moyens formant mémoire de moyens de traitement pour un système d'imagerie à radar à synthèse d'ouverture inverse, et comprenant des parties de code logiciel configurées pour mettre en oeuvre la technique de mise au point multicanal décentralisée du procédé d'imagerie à radar à synthèse d'ouverture inverse selon l'une quelconque des revendications précédentes.
